# EUROPEAN PATENT APPLICATION

(11) **EP 4 827 147 A1**
(43) Date of publication of application: **21.10.2026**
(21) Application number: 24902812.7
(22) Date of filing: 10.12.2024
(51) Int. Cl.: H04W 24/02, H04W 72/542

(54) **SENSING PROCESSING METHOD AND APPARATUS, DEVICE, AND READABLE STORAGE MEDIUM**

(30) Priority: 11.12.2023 CN 202311697104
(71) Applicant: Vivo Mobile Communication Co., Ltd., Dongguan, Guangdong 523863 (CN)
(72) Inventor: JIANG, Dajie, Dongguan, Guangdong 523863 (CN); YAO, Jian, Dongguan, Guangdong 523863 (CN); LI, Jianzhi, Dongguan, Guangdong 523863 (CN); DING, Shengli, Dongguan, Guangdong 523863 (CN)
(74) Representative: Cabinet Beaumont
(86) International application number: PCT/CN2024/138206
(87) International publication number: WO 2025/124391

(57) **Abstract**

This application discloses a sensing processing method and apparatus, a device, and a readable storage medium. The method includes: measuring, by a terminal, one or more first signals to obtain measurements of a target indicator of the one or more first signals. The target indicator includes at least one of the following: a first indicator, a second indicator, and a third indicator. The first indicator is a linear average of received power of a sensing target-associated path in a channel response obtained by measuring a target signal on a resource unit carrying the target signal; the second indicator includes at least one of the following: a fourth indicator, a fifth indicator, and a sixth indicator, where the fourth indicator is a sum of a linear average of power of paths other than the sensing target-associated path in the channel response of the target signal on a target resource and a linear average of power of interference and noise from signals other than the target signal on a first resource; and the fifth indicator is a linear average of power of the interference and noise from the signals other than the target signal on a second resource.

## Description

### CROSS-REFERENCE TO RELATED APPLICATIONS

This application claims priority to Chinese Patent Application No. 202311697104.8, filed with the China National Intellectual Property Administration on December 11, 2023 and entitled "SENSING PROCESSING METHOD AND APPARATUS, DEVICE, AND READABLE STORAGE MEDIUM", which is incorporated herein by reference in its entirety.

### TECHNICAL FIELD

This application belongs to the technical field of communication, and in particular relates to a sensing processing method and apparatus, a device, and a readable storage medium.

### BACKGROUND

A sensing service for a passive object (for example, trajectory tracking for an unmanned aerial vehicle, sensing for a weather condition, reconstruction for a 3D environment, etc.) requires the participation of a base station and a terminal. There are a plurality of terminals at different locations around a sensing target or a sensing area. How to obtain sensing quality of sensing performed by a terminal according to a first signal is an urgent problem to be solved.

### SUMMARY

Embodiments of this application provide a sensing processing method and apparatus, a device, and a readable storage medium, to solve the problem of how to obtain sensing quality of sensing performed by a terminal according to a first signal.

According to a first aspect, an embodiment of this application provides a sensing processing method, including:
measuring, by a terminal, one or more first signals to obtain measurements of a target indicator of the one or more first signals, where
the target indicator includes at least one of the following: a first indicator, a second indicator, and a third indicator;
the first indicator is a linear average of received power of a sensing target-associated path in a channel response obtained by measuring a target signal on a resource unit carrying the target signal;
the second indicator includes at least one of the following: a fourth indicator, a fifth indicator, and a sixth indicator, where the fourth indicator is a sum of a linear average of power of paths other than the sensing target-associated path in the channel response of the target signal on a target resource and a linear average of power of interference and noise from signals other than the target signal on a first resource, where the first resource is the target resource or a resource other than the target resource; the fifth indicator is a linear average of power of interference and noise from the signals other than the target signal on a second resource, and the second resource is the target resource or a resource other than the target resource; the sixth indicator is a linear average of power of paths other than the sensing target-associated path in the channel response of the target signal on the target resource; the target resource includes a resource unit carrying the first signal;
the third indicator includes at least one of the following: a seventh indicator, an eighth indicator, a ninth indicator, and a tenth indicator, where the seventh indicator represents the first indicator divided by the fourth indicator, the eighth indicator represents the first indicator divided by the fifth indicator, the ninth indicator represents the first indicator divided by the sixth indicator, the tenth indicator represents the first indicator divided by a first received power and then multiplied by a first coefficient, the first received power represents total received power on the target resource, or the first received power represents a product of a received signal strength indication RSSI and a second coefficient, and a measurement resource of the RSSI is the target resource or another resource.

According to a second aspect, an embodiment of this application provides a sensing processing method, including:
sending, by a network-side device, first information, where the first information includes a target indicator of a first signal that a terminal needs to measure, where
the target indicator includes at least one of the following: a first indicator, a second indicator, and a third indicator;
the first indicator is a linear average of received power of a sensing target-associated path in a channel response obtained by measuring a target signal on a resource unit carrying the target signal;
the second indicator includes at least one of the following: a fourth indicator, a fifth indicator, and a sixth indicator, where the fourth indicator is a sum of a linear average of power of paths other than the sensing target-associated path in the channel response of the target signal on a target resource and a linear average of power of interference and noise from signals other than the target signal on a first resource, where the first resource is the target resource or a resource other than the target resource; the fifth indicator is a linear average of power of interference and noise from the signals other than the target signal on a second resource, and the second resource is the target resource or a resource other than the target resource; the sixth indicator is a linear average of power of paths other than the sensing target-associated path in the channel response of the target signal on the target resource; the target resource includes a resource unit carrying the first signal;
the third indicator includes at least one of the following: a seventh indicator, an eighth indicator, a ninth indicator, and a tenth indicator, where the seventh indicator represents the first indicator divided by the fourth indicator, the eighth indicator represents the first indicator divided by the fifth indicator, the ninth indicator represents the first indicator divided by the sixth indicator, the tenth indicator represents the first indicator divided by a first received power and then multiplied by a first coefficient, the first received power represents total received power on the target resource, or the first received power represents a product of a received signal strength indication RSSI and a second coefficient, and a measurement resource of the RSSI is the target resource or another resource.

According to a third aspect, an embodiment of this application provides a sensing processing apparatus, including:
a first measurement module, configured to measure one or more first signals to obtain measurements of a target indicator of the one or more first signals, where
the target indicator includes at least one of the following: a first indicator, a second indicator, and a third indicator;
the first indicator is a linear average of received power of a sensing target-associated path in a channel response obtained by measuring a target signal on a resource unit carrying the target signal;
the second indicator includes at least one of the following: a fourth indicator, a fifth indicator, and a sixth indicator, where the fourth indicator is a sum of a linear average of power of paths other than the sensing target-associated path in the channel response of the target signal on a target resource and a linear average of power of interference and noise from signals other than the target signal on a first resource, where the first resource is the target resource or a resource other than the target resource; the fifth indicator is a linear average of power of interference and noise from the signals other than the target signal on a second resource, and the second resource is the target resource or a resource other than the target resource; the sixth indicator is a linear average of power of paths other than the sensing target-associated path in the channel response of the target signal on the target resource; the target resource includes a resource unit carrying the first signal;
the third indicator includes at least one of the following: a seventh indicator, an eighth indicator, a ninth indicator, and a tenth indicator, where the seventh indicator represents the first indicator divided by the fourth indicator, the eighth indicator represents the first indicator divided by the fifth indicator, the ninth indicator represents the first indicator divided by the sixth indicator, the tenth indicator represents the first indicator divided by a first received power and then multiplied by a first coefficient, the first received power represents total received power on the target resource, or the first received power represents a product of a received signal strength indication RSSI and a second coefficient, and a measurement resource of the RSSI is the target resource or another resource.

According to a fourth aspect, an embodiment of this application provides a sensing processing apparatus, applied to a network-side device, including:
a second sending module, configured to send first information, where the first information includes a target indicator of a first signal that a terminal needs to measure, where
the target indicator includes at least one of the following: a first indicator, a second indicator, and a third indicator;
the first indicator is a linear average of received power of a sensing target-associated path in a channel response obtained by measuring a target signal on a resource unit carrying the target signal;
the second indicator includes at least one of the following: a fourth indicator, a fifth indicator, and a sixth indicator, where the fourth indicator is a sum of a linear average of power of paths other than the sensing target-associated path in the channel response of the target signal on a target resource and a linear average of power of interference and noise from signals other than the target signal on a first resource, where the first resource is the target resource or a resource other than the target resource; the fifth indicator is a linear average of power of interference and noise from the signals other than the target signal on a second resource, and the second resource is the target resource or a resource other than the target resource; the sixth indicator is a linear average of power of paths other than the sensing target-associated path in the channel response of the target signal on the target resource; the target resource includes a resource unit carrying the first signal;
the third indicator includes at least one of the following: a seventh indicator, an eighth indicator, a ninth indicator, and a tenth indicator, where the seventh indicator represents the first indicator divided by the fourth indicator, the eighth indicator represents the first indicator divided by the fifth indicator, the ninth indicator represents the first indicator divided by the sixth indicator, the tenth indicator represents the first indicator divided by a first received power and then multiplied by a first coefficient, the first received power represents total received power on the target resource, or the first received power represents a product of a received signal strength indication RSSI and a second coefficient, and a measurement resource of the RSSI is the target resource or another resource.

According to a fifth aspect, an embodiment of this application provides a terminal, including a processor, a memory, and a program or an instruction stored in the memory and runnable on the processor, where the program or the instruction, when executed by the processor, implements the steps of the method according to the first aspect.

According to a sixth aspect, an embodiment of this application provides a network-side device, including a processor, a memory, and a program or an instruction stored in the memory and runnable on the processor, where the program or the instruction, when executed by the processor, implements the steps of the method according to the second aspect.

According to a seventh aspect, an embodiment of this application provides a readable storage medium, having a program or an instruction stored therein, where the program or the instruction, when executed by a processor of a terminal, implements the steps of the method according to the first aspect or the second aspect.

According to an eighth aspect, an embodiment of this application provides a chip, including a processor and a communication interface, where the communication interface is coupled to the processor, and the processor is configured to run a program or an instruction to implement the steps of the method according to the first aspect or the second aspect.

According to a ninth aspect, an embodiment of this application provides a computer program/program product stored in a non-volatile storage medium and configured to be executed by at least one processor to implement steps of the method according to the first aspect or the second aspect.

According to a tenth aspect, an embodiment of this application provides a communication system, including a terminal and a network-side device, where the terminal is configured to implement the steps of the method according to the first, and the network-side device is configured to implement the steps of the method according to the second aspect.

In the embodiments of this application, a terminal measures one or more first signals to obtain measurements of a target indicator of the one or more first signals, and the measurements of the target indicator of the first signal can well reflect sensing quality of sensing performed by the terminal according to the first signal.

### BRIEF DESCRIPTION OF THE DRAWINGS

FIG. 1 is a schematic diagram of different sensing modes of integrated sensing and communication;
FIG. 2 is a schematic diagram of a four-step random access;
FIG. 3 is a schematic diagram of a two-step random access;
FIG. 4 is a schematic diagram of a timing relationship between a PRACH channel and a PUSCH channel of MSG A;
FIG. 5 is a schematic diagram of association between a Preamble of an RO and a DMRS of a PO in two-step RACH;
FIG. 6 is a flowchart I of a sensing processing method according to an embodiment of this application;
FIG. 7 is a flowchart II of a sensing processing method according to an embodiment of this application;
FIG. 8 is a flowchart III of a sensing processing method according to an embodiment of this application;
FIG. 9 is a flowchart IV of a sensing processing method according to an embodiment of this application;
FIG. 10 is a schematic diagram of multi-paths of a channel response in a first dimension;
FIG. 11 is a schematic diagram I of a sensing processing apparatus according to an embodiment of this application;
FIG. 12 is a schematic diagram II of a sensing processing apparatus according to an embodiment of this application;
FIG. 13 is a schematic diagram of a terminal according to an embodiment of this application;
FIG. 14 is a schematic diagram of a network-side device according to an embodiment of this application; and
FIG. 15 is a schematic diagram of a communication device according to an embodiment of this application.

### DETAILED DESCRIPTION

The technical solutions in embodiments of this application will be clearly described below with reference to the drawings in the embodiments of this application. Apparently, the described embodiments are merely some rather than all of the embodiments of this application. All other embodiments obtained by those skilled in the art based on the embodiments of this application still fall within the scope of protection this application.

Terms such as "first" and "second" in this application are used for distinguishing similar objects, instead of describing a specific order or sequence. It is to be understood that terms used in this way are exchangeable in a proper case, so that the embodiments of this application can be implemented in an order different from the order shown or described herein; and the objects distinguished by "first" and "second" are usually of the same class and do not limit the number of the objects; for example, the number of first objects may be one or more. In addition, "or" in this application represents at least one of the connected objects. For example, "A or B" covers three solutions, i.e., solution one: A is included and B is not included; solution two: B is included and A is not included; solution three: both A and B are included. The character "/" generally represents an "or" relationship between the associated objects.

It is worth pointing out that the technologies described in the embodiments of this application are not limited to the long term evolution (LTE)/LTE-advanced (LTE-A) system, and may further be applied to other wireless communication systems such as code division multiple access (CDMA), time division multiple access (TDMA), frequency division multiple access (FDMA), orthogonal frequency division multiple access (OFDMA), single carrier frequency division multiple access (SC-FDMA), and other systems. The terms "system" and "network" in this application can usually be exchanged in use. The technologies described not only can be applied to the systems and radio technologies mentioned above, but also can be applied to other systems and radio technologies. The following description describes the new radio (NR) system for example purposes and uses NR terminology in most of the following description, but these technologies can also be applied to systems in addition to NR systems, such as 6th generation (6G) communication systems.

For the convenience of understanding the embodiments of this application, the technical points will be introduced first:

### I. Integrated Sensing and Communication

A future mobile communication system, such as a beyond 5th generation (B5G) mobile communication system or a 6th generation (6G) mobile communication system, will have a sensing capability in addition to a communication capability. Sensing capabilities means that one or more devices with sensing capabilities can sense the orientation, distance, speed, and other information of target objects through wireless signal transmission and reception, or detect, track, identify, and image target objects, events, or environments. In the future, with the deployment of small base stations with high-frequency and large bandwidth capabilities such as millimeter waves and terahertz waves in 6G networks, the sensing resolution will be significantly improved compared to centimeter waves, enabling 6G networks to provide more refined sensing services. Typical sensing functions and application scenarios are as shown in Table 1.

**Table 1: Typical sensing functions and application scenarios**

| Communication and sensing category | Sensing function | Application scenario |
|---|---|---|
| Macro sensing | Weather conditions, air quality, etc. | Meteorology, agriculture, and lifestyle services |
| | Traffic flow (intersection), pedestrian flow (subway entrance) | Intelligent transportation and commercial services |
| | Target tracking, ranging, speed measurement, outline contour, etc. | Many application scenarios of traditional radar |
| | Environment reconstruction | Intelligent driving and navigation (for automobiles or unmanned aerial vehicles), smart city (3D map), network planning and network optimization |
| Fine-grained sensing | Action or gesture or expression recognition | Intelligent interaction of smart phones, gaming, and smart home |
| | Heartbeat or respiration, etc. | Health and medical care |
| | Imaging, material detection, composition analysis, etc. | Security check, industry, biomedicine, etc. |

Integrated sensing and communication (ISAC) refers to the design of integrated communication and sensing functions through spectrum sharing and hardware sharing in the same system. The system can sense information such as orientation, distance, and speed while transmitting information, and detect, track, and identify target devices or events. The communication system and the sensing system complement each other, achieving overall performance improvement and bringing better service experience.

The integration of communication and radar belongs to the typical application of integrated sensing and communication (communication and sensing integration). In the past, the radar system and the communication system were strictly distinguished due to different research objects and focus, and in most scenarios, the two systems were studied independently. In fact, the radar and communication systems are both typical ways of information transmission, acquisition, processing, and exchange, and there are many similarities in their working principles, system architectures, and frequency bands. The design of communication and radar integration has relatively high feasibility, which is mainly reflected in the following aspects: firstly, both the communication system and the sensing system are based on electromagnetic wave theory, and utilize the emission and reception of electromagnetic waves to acquire and transmit information. Secondly, both the communication system and the sensing system have structures such as antennas, transmitters, receivers and signal processors, with significant overlap in hardware resources. With the development of technology, there is an increasing overlap between the two in their operating frequency bands. In addition, there are similarities in key technologies such as signal modulation and reception and detection, and waveform design. The integration of communication and radar systems can bring many advantages, such as cost savings, reduced size, lower power consumption, improved spectrum efficiency, and reduced mutual interference, thus improving the overall performance of the system.

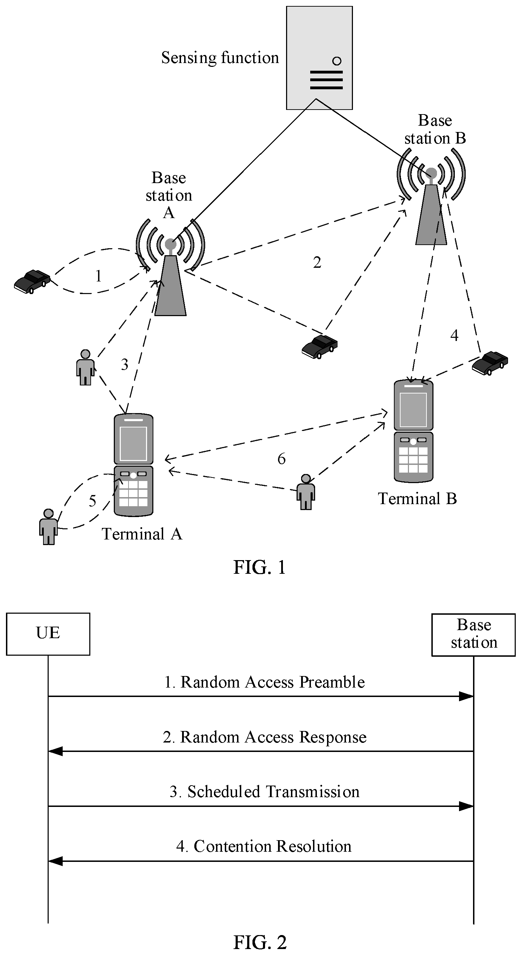

According to the different first signal sending nodes and receiving nodes, there are six basic sensing methods, as shown in FIG. 1, which specifically include:
(1) Base station echo sensing. In this sensing mode, base station A sends a first signal, and performs sensing measurement by receiving an echo of the first signal.
(2) Air interface sensing between base stations. Base station B receives a first signal sent by base station A and performs sensing measurement.
(3) Uplink air interface sensing. Base station A receives a first signal sent by terminal A and performs sensing measurement.
(4) Downlink air interface sensing. Terminal B receives a first signal sent by base station B and performs sensing measurement.
(5) Terminal echo sensing. Terminal A sends a first signal and performs sensing measurement by receiving an echo of the first signal.
(6) Sidelink (SL) sensing between terminals. Terminal B receives a first signal sent by terminal A and performs sensing measurement.

It is worth noting that each sensing method in FIG. 1 takes one first signal sending node and one first signal receiving node as examples. In actual systems, one or more different sensing methods may be selected according to different sensing use cases and sensing requirements, and each sensing method may have one or more sending nodes and receiving nodes. In FIG. 1, the sensing targets take people and cars as examples, and it is assumed that neither the people nor the cars carry or install a signal receiving or sending device, and the sensing targets in actual scenarios are more diverse.

The first signal herein includes at least one of a reference signal, a synchronization signal, a data signal, and a dedicated signal. A sensing service can be supported by receiving or sending the first signal. For example, a sensing measurement quantity or a sensing result can be obtained by receiving or sending the first signal, where the sensing result is a result that satisfies a sensing requirement, such as: a shape of a sensing target, 2D or 3D environment reconstruction, a spatial position, an orientation, a displacement, a moving speed, an acceleration; speed measurement, distance measurement, angle measurement, or imaging of a target object in radar-type sensing; presence or absence of a person or an object; and actions, gestures, respiration rate, heart rate, sleep quality, and the like of a sensing target such as a person.

Optionally, the first signal in this application may be a signal that does not contain transmission information, such as existing long term evolution (LTE) or new radio (NR) synchronization and reference signals, including a synchronization signal and PBCH block (SSB) signal, a channel state information-reference signal (CSI-RS), a demodulation reference signal (DMRS), a sounding reference signal (SRS), a positioning reference signal (PRS), a phase tracking reference signal (PTRS), etc.; or may be a single-frequency continuous wave (CW), a frequency modulated continuous wave (FMCW), or an ultra-wideband Gaussian pulse, etc., which are commonly used in radar; or may be a newly designed dedicated signal having good correlation characteristics and a low peak-to-average power ratio, or a newly designed integrated sensing and communication signal that carries specific information and has good sensing performance. For example, the new signal is formed by concatenating, combining, or superimposing at least one dedicated first signal or reference signal and at least one communication signal in a time domain or a frequency domain.

The sensing function network element in this application, which may also be referred to as a sensing network element or a sensing function, may be located on a radio access network (RAN) side or a core network side, i.e., may be a network node in the core network or the RAN that is responsible for at least one function such as sensing request processing, sensing resource scheduling, sensing information exchange, sensing data processing, etc., for example, may be upgraded based on an access and mobility management function (AMF) or a location management function (LMF) in a 5G network, or may be another network node or a newly defined network node. Specifically, the functional characteristics of the sensing function network element may include at least one of the following:
(1) Performing target information interaction with a wireless signal sending device or a wireless signal measurement device (including a target terminal, or a serving base station of the target terminal, or a base station associated with a target area), where the target information includes a sensing processing request, a sensing capability, sensing assistance data, a sensing measurement quantity type, sensing resource configuration information, etc., so as to obtain a value of a target sensing result or a sensing measurement quantity (an uplink measurement quantity or a downlink measurement quantity) sent by the wireless signal measurement device, where the wireless signal may also be referred to as a first signal.
(2) Determining, based on factors such as a sensing service type, sensing service consumer information, required sensing quality of service (QoS) requirement information, a sensing capability of the wireless signal sending device, and a sensing capability of the wireless signal measurement device, a sensing method to be used, where the sensing method may include: transmission by base station A and reception by base station B, transmission by a base station and reception by a terminal, self-transmission and self-reception of base station A, transmission by a terminal and reception by a base station, self-transmission and self-reception by a terminal, as well as transmission by terminal A and reception by terminal B, among others.
(3) Determining, based on factors such as the sensing service type, the information of the sensing service consumer, the required sensing QoS requirement information, the sensing capability of the wireless signal sending device, and the sensing capability of the wireless signal measurement device, a sensing device to serve the sensing service, where the sensing device includes the wireless signal sending device or the wireless signal measurement device.
(4) Managing overall coordination and scheduling of resources required for a sensing service, such as performing corresponding configuration on sensing resources of a base station or a terminal.
(5) Performing data processing on a value of a sensing measurement quantity, or performing calculation to obtain a sensing result. Further, it includes verifying the sensing result, estimating sensing accuracy, etc.

The terminal in this application may be a terminal-side device such as a mobile phone, a tablet personal computer, a laptop computer, a personal digital assistant (PDA), a hand-held computer, a netbook, an ultra-mobile personal computer (UMPC), a mobile Internet device (MID), an augmented reality (AR) or virtual reality (VR) device, a robot, a wearable device, vehicle user equipment (VUE), pedestrian user equipment (PUE), smart home (home devices with wireless communication functions, such as refrigerators, televisions, washing machines, or furniture), a game console, a personal computer (PC), an ATM or a self-service machine. The wearable device includes a smart watch, a smart bracelet, smart headphones, smart glasses, a smart jewelry (smart bangle, smart bracelet, smart ring, smart necklace, smart ankle bangle, smart ankle bracelet, etc.), a smart wristband, smart clothing, a game console, etc. It should be noted that the specific type of the terminal is not limited in the embodiments of this application.

The core network device in this application may include but is not limited to at least one of the following: core network node, core network function, mobility management entity (MME), AMF, LMF, session management function (SMF), user plane function (UPF), policy control function (PCF), policy and charging rules function (PCRF), edge application server discovery function (EASDF), unified data management (UDM), unified data unified data repository (UDR), home subscriber server (HSS) centralized network configuration (CNC), network repository function (NRF), network exposure function (NEF), local NEF (Local NEF or L-NEF), binding support function (BSF), application function (AF), etc. It should be noted that the core network device in the NR system is used only as an example for description in the embodiments of this application, and a specific type of the core network device is not limited.

### II. Introduction to Four-Step Random Access

The basic flow of contention-based four-step random access (taking a synchronization signal and PBCH block (SSB) as an example) is shown in FIG. 2:
Step 1: A terminal (e.g., a user equipment (UE)) determines, based on an SSB index for which a measured synchronization signal reference signal received power (SS-RSRP) of a target cell is greater than an RSRP preset threshold (rsrp-ThresholdSSB), a physical random access channel (PRACH) occasion associated with the SSB index, specifically, a next available PRACH occasion subsequent to a PRACH occasion corresponding to the SSB. The RSRP preset threshold is notified by a base station to the UE.

Step 1: The UE selects a preamble index. For example, the UE randomly selects a preamble index.

Step 2: The UE sends, according to the PRACH Occasion and the preamble index determined in step 1, Message 1 (MSG 1) to the base station.

Before the UE sends MSG 1, the UE needs to determine a target received power of MSG 1, so as to determine a transmit power of MSG 1.

Step 3: after receiving MSG 1, the base station sends Message 2 (MSG 2) to the UE.

Optionally, the base station calculates, based on the received preamble, a timing advance (TA) of the UE, and sends the TA to the user by means of MSG 2 (for use when the UE sends Message 3 (MSG 3)). In addition, MSG 2 further includes time-frequency resource allocation information for scheduling MSG 3, power control information, etc.

Optionally, MSG 2 includes a preamble index detected by the base station, a TA command, a temporary cell-radio network temporary identifier (TC-RNTI), and an uplink grant, where the uplink grant is used to indicate time-frequency resource allocation information and power control information for scheduling MSG 3.

Optionally, after sending the preamble, the UE will monitor, within a random access response (RAR) window, a physical downlink control channel (PDCCH) to receive an RAR corresponding to a random access-radio network temporary identifier (RA-RNTI). If no RAR replied by the base station is received within the RAR time window, it is considered that the random access procedure fails.

Optionally, when the UE receives an RAR successfully, and the preamble index carried in the RAR is the same as the preamble index sent by the UE, it is considered that the RAR is received successfully, and at this time, the UE may stop monitoring the RAR.

Step 4: After receiving MSG 2, the UE sends MSG 3 to the base station according to the indication of MSG 2 (TA, resource allocation information, power control information, etc.).

Optionally, MSG 3 includes a contention resolution identifier, which may be a user identifier or a user identifier from a core network. Specifically:
1) For a UE in a radio resource control connected state (RRC_CONNECTED), its unique identifier is a C-RNTI.
2) For a UE in a radio resource control idle state (RRC_IDLE), a unique UE identifier from a core network will be used: a 39-bit ng-5G-S-TMSI-Part1 or a 39-bit random number is used as its identifier. At this time, the base station needs to communicate with the core network first, in order to respond to MSG 3.
3) For a UE in a radio resource control inactive state (RRC_INACTIVE), a unique UE identifier from a core network will be used: a 24-bit resumeIdentity (ShortI-RNTI-Value) or a 40-bit resumeIndetity (I-RNTI-Value) is used as its identifier, for use in resuming a UE context.

Step 5: The base station receives MSG 3, and sends Message 4 (MSG 4) to the UE.

Optionally, the base station sends, to the UE, MSG 4 scrambled by the user identifier in MSG 3.

Optionally, if the scrambling identifier of MSG 4 received by the UE matches the user identifier in MSG 3, the random access procedure is completed.

Event triggering scenarios of the random access procedure:
1) Initial access: the UE goes from an RRC_IDLE state to an RRC_CONNECTED state;
2) RRC connection re-establishment: to re-establish a radio connection after a radio link failure of the UE (the re-established cell may be the cell where the UE experienced the radio link failure, or may not be);
3) Handover: the UE is in an RRC_CONNECTED state, and at this time, the UE needs a new cell to establish uplink synchronization;
4) In the RRC_CONNECTED state, when uplink or downlink data arrives, the UE is in an uplink out-of-synchronization state at this time;
5) In the RRC_CONNECTED state, when uplink data arrives, the UE has no physical uplink control channel (PUCCH) resource for a scheduling request (SR) at this time;
6) SR failure: a PUCCH resource is re-obtained through a random access procedure;
7) Request of the RRC upon synchronous reconfiguration;
8) Access in the RRC_INACTIVE state: the UE goes from an RRC_INACTIVE state to an RRC_CONNECTED state;
9) Establishing time alignment upon addition of a secondary cell (SCell);
10) Request for other system information (SI): when the UE is in an RRC_IDLE state or an RRC_CONNECTED state, the UE requests other SI through a random access procedure;
11) Beam failure recovery: when the UE detects a failure and finds a new beam, the UE selects the new beam.

Therefore, the random access procedure has two different modes:
Mode 1: contention-based random access procedure: applied to 2), 3), 4), 5), 6), 8), 10) or 11) above.
Mode 2: non-contention-based random access procedure: applied to 3), 4), 7), 9), 10) or 11) above.

For the contention-based random access procedure, the UE can only initiate the procedure on a PCell, while for the non-contention-based random access procedure, the UE can initiate the procedure on a primary cell (PCell) or on an SCell.

### III. Introduction to Two-Step Random Access

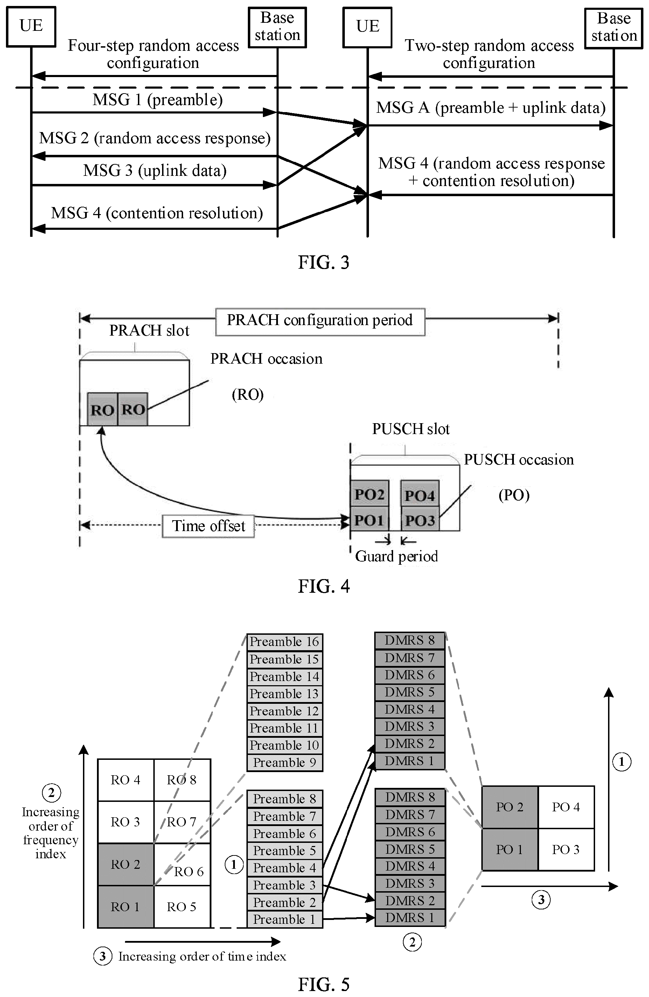

Two-step RACH is an enhancement of four-step RACH, as shown in FIG. 3.

Message A (MSG A) of two-step RACH includes a preamble sent on a PRACH channel (i.e., MSG 1 in four-step RACH) and a payload sent on a PUSCH channel (i.e., MSG 3 in four-step RACH). There is a time interval between the preamble and a physical uplink shared channel (PUSCH).

Optionally, unlike the transmission resource of MSG 3 in four-step RACH, which is indicated by MSG 2, the transmission resource of the MSG A PUSCH in two-step RACH uses a part of time-frequency resources reserved periodically.

Optionally, there is an association relationship between the PRACH and the PUSCH, so that after determining the PRACH, the UE can determine the corresponding PUSCH.

Optionally, if the preamble selected by the UE has no corresponding PUSCH occasion (PO), the UE sends only the preamble (which is equivalent to falling back to four-step RACH).

Optionally, after the MSG A is detected, the base station feeds back Message B (MSG B). The MSG B is carried on a PDCCH and a physical downlink shared channel (PDSCH). The PDCCH is scrambled by an MSG B-RNTI, and the MSG B-RNTI is determined by a time-frequency position of an RACH occasion (RO) on which the PRACH is transmitted. A value range of the MSG B-RNTI is different from a value range of the RA-RNTI.

Optionally, when the MSG A sent by the UE is detected successfully, and the MSG B fed back by the base station includes a success RAR for the user, the UE feeds back a hybrid automatic repeat request-acknowledgment (HARQ-ACK) information indicating successful reception of the MSG B, which indicates that the UE has completed the random access procedure successfully.

Optionally, after the UE sends the MSG A, if the UE does not correctly receive, within a detection window, the MSG B RAR corresponding to the preamble of the UE, the UE needs to perform retransmission of the MSG A and increase a transmit power.

Optionally, when a number of retransmissions of the MSG A in the two-step RACH reaches a target threshold, the UE falls back to four-step RACH, i.e., the UE sends MSG 1.

In addition, when the base station can correctly detect the preamble of the MSG A but the PUSCH message fails to be demodulated, the base station may feed back a fallback RAR, similar to MSG 2 in four-step RACH, for scheduling the sending of MSG 3 of the UE; if retransmission occurs due to a failure in sending MSG 3 at this time, two-step RACH needs to be preferentially used for retransmission of the MSG A. (That is, it falls back to four-step RACH, but the preamble is no longer sent, because it has been successfully sent in two-step RACH).

Optionally, time-frequency resources of two-step RACH are independently configured, or two-step RACH and four-step RACH share RO resources and are distinguished by different preamble sequence sets.

Application scenarios: compared with four-step RACH, two-step RACH has a shorter total delay, less signaling overhead and power consumption, and is suitable for scenarios such as unlicensed spectrum and small data packet transmission.

The timing relationship between the PRACH channel and the PUSCH channel of MSG A is shown in FIG. 4. That is, within a PRACH configuration period, there is a time offset (time offset) between a PRACH slot and a PUSCH slot, and there is a correspondence between a PO (PUSCH occasion) and an RO (RACH Occasion). That is, the PO associated with an RO can be determined according to the RO.

Definition of PO: a PUSCH occasion for PUSCH transmission is defined by a set of frequency resources, time resources, etc.

Optionally, each PO may also carry a plurality of demodulation reference signal (DMRS) resources, with multiplexing of up to 8 DMRS resources per PO.

### IV. Association between Preamble of RO and DMRS of PO in Two-Step RACH

After selecting a RO and a preamble index of the RO, the UE finds, through a predefined mapping rule, a corresponding PO and DMRS resources for transmitting the PUSCH. FIG. 5 shows an example of the mapping. The horizontal axis of the schematic diagram on the left represents an increasing order of time index, and the vertical axis represents an increasing order of frequency index.

A sensing processing method and apparatus, a communication device, and a readable storage medium provided in the embodiments of this application will be described below in detail through some embodiments and application scenarios thereof with reference to the drawings.

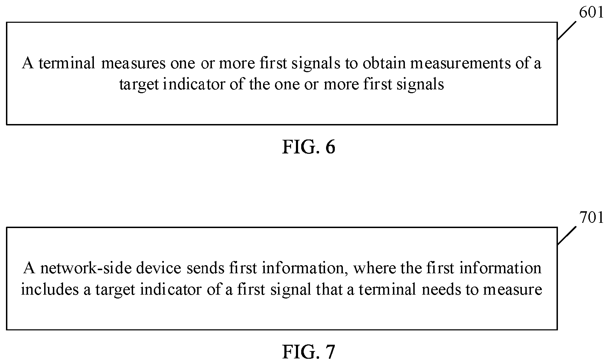

Referring to FIG. 6, an embodiment of this application provides a sensing processing method, applied to a terminal, specifically including step 601.

Step 601: A terminal measures one or more first signals to obtain measurements of a target indicator of the one or more first signals.

The target indicator includes at least one of the following: a first indicator, a second indicator, and a third indicator, where the first indicator is related to received power, the second indicator is related to interference and noise power, and the third indicator is related to received power, interference and noise power simultaneously.

The target indicator includes at least one of the following (1) to (3):

### (1) First indicator

The first indicator is a linear average of received power of a sensing target-associated path in a channel response obtained by measuring a target signal on a resource unit carrying the target signal (in W).

### (2) Second indicator

The second indicator includes at least one of the following (2a) to (2c):

### (2a) Fourth indicator

The fourth indicator is a sum (in W) of a linear average of power of paths other than the sensing target-associated path in the channel response of the target signal on a target resource and a linear average of power of interference and noise from signals other than the target signal on a first resource. The first resource is the target resource or a resource other than the target resource. The target resource includes a resource unit carrying the first signal, and the resource unit may be a time-domain resource unit or a frequency-domain resource unit.

Optionally, the fourth indicator = total received power - the first indicator. The total received power may be represented as: a linear average (in W) of total received power on the target resource (including received power of signals from a serving cell and non-serving cells, adjacent channel interference, thermal noise, etc.). Alternatively, the total received power = RSSI*K1, where K1 is a coefficient, and a measurement resource of the RSSI is the target resource or another resource (e.g., a resource configured by higher layer signaling).

### (2b) Fifth indicator

The fifth indicator is a linear average of power of interference and noise from the signals other than the target signal on a second resource, and the second resource is the target resource or a resource other than the target resource.

Optionally, the fifth indicator = total received power - received power of the first signal. The received power of the first signal is reference signal received power (RSRP) of the first signal.

### (2c) Sixth indicator

The sixth indicator is a linear average (in W) of power of paths other than the sensing target-associated path in the channel response of the target signal on the target resource.

Optionally, the sixth indicator = RSRP of the first signal - the first indicator.

### (3) Third indicator

The third indicator includes at least one of the following (3a) to (3d):

### (3a) Seventh indicator

The seventh indicator represents the first indicator divided by the fourth indicator, i.e., the seventh indicator = the first indicator/the fourth indicator.

### (3b) Eighth indicator

The eighth indicator represents the first indicator divided by the fifth indicator, i.e., the eighth indicator = the first indicator/the fifth indicator.

### (3c) Ninth indicator

The ninth indicator represents the first indicator divided by the sixth indicator, i.e., the ninth indicator = the first indicator/the sixth indicator.

### (3d) Tenth indicator

The tenth indicator represents the first indicator divided by a first received power and then multiplied by a preset first coefficient, where the first received power represents total received power on a target resource, or the first received power represents a product of a received signal strength indication (RSSI) and a preset second coefficient, and a measurement resource of the RSSI is the target resource or another resource, i.e., the tenth indicator = K2 * the first indicator / total received power, where K2 is a coefficient.

In an implementation of this application, a method for acquiring the sensing target-associated path includes:
performing, by the terminal based on a target signal and a received signal corresponding to the target signal, channel estimation to obtain a channel response;
transforming, by the terminal, the channel response into a first dimension; and
determining, by the terminal, a sensing target-associated path from paths corresponding to the first dimension, where
the first dimension includes at least one of the following: a delay dimension; a Doppler dimension; an azimuth angle dimension; an elevation angle dimension.

In an implementation of this application, the determining, by the terminal, a sensing target-associated path from paths corresponding to the first dimension includes:
selecting, by the terminal, a path satisfying a first condition as the sensing target-associated path from the paths corresponding to the first dimension, where
the first condition includes at least one of the following:
   1) a first parameter of the path is greater than or equal to a first threshold or falls within a first interval range;
   2) a difference between the first parameter of the path and that of a first-arrival path or a reference path is greater than or equal to a second threshold or falls within a second interval range;
   3) a second parameter of the path satisfies a preset modulation rule, where
the first parameter includes at least one of the following: amplitude, power, strength, energy, Doppler, delay, and angle;
the second parameter includes at least one of the following: amplitude, power, strength, energy, and phase.

In an implementation of this application, the selecting, by the terminal, a path satisfying a second condition as the sensing target-associated path from the paths corresponding to the first dimension includes:
determining, by the terminal, a first path set from the paths corresponding to the first dimension, where a third parameter of each path in the first path set is greater than or equal to a third threshold, and the third parameter includes at least one of the following: amplitude, power, strength, energy; and
determining, by the terminal, from the first path set, a path satisfying a first condition as the sensing target-associated path.

In an implementation of this application, a method for calculating the first indicator is as follows:
The terminal performs channel estimation based on a sent first signal (hereinafter denoted as *X*(*k*)) and a received signal corresponding to the first signal (hereinafter denoted as *Y*(*k*)) to obtain a channel response, i.e., *H*(*k*) *= Y*(*k*)/*X*(*k*)*,* where *k* = 0,1,2, ..., *K -* 1 represents the resource unit index. After obtaining the channel response *H*(*k*), the terminal transforms it into a first dimension, and determines a sensing target-associated path in the first dimension. Then, the terminal calculates power of the sensing target-associated path as the first indicator, and if the sensing target-associated path includes a plurality of paths, calculates a sum of powers of the plurality of paths as the first indicator.

The first dimension includes at least one of the following: a delay dimension; a Doppler dimension; an azimuth angle dimension; an elevation angle dimension, for example, a delay-Doppler dimension, a delay-Doppler-angle dimension, etc.

For example, let *H*(*f*) be a channel response, where *f =* 0,1,2, *... , N* - 1 represents a frequency-domain sampling point (e.g., a subcarrier index), then by performing an inverse Fourier transform on *H*(*f*)*,* it can be transformed into a delay dimension (the first dimension). For another example, let *H*(*f, t*) be a channel response, where *f =* 0,1,2, ..., *N* - 1 represents a frequency-domain sampling point (e.g., a subcarrier index), and *t* = 0,1,2, ..., *M* - 1 represents a time-domain sampling point (e.g., an OFDM symbol index), then by performing, on *H*(*f, t*)*,* an inverse Fourier transform along the frequency domain dimension and a Fourier transform along the time domain dimension, it can be transformed into a delay-Doppler dimension (the first dimension). For another example, let *H*(*f, t, s*) be a channel response, where *f* = 0,1,2, ..., *N -* 1 represents a frequency-domain sampling point (e.g., a subcarrier index), *t* = 0,1,2, ..., *M* - 1 represents a time-domain sampling point (e.g., an orthogonal frequency division multiplexing symbol index), and s = 0,1,2, ..., *P* - 1 represents a spatial-domain sampling point (an antenna index or a port index), then by performing, on *H*(*f, t, s*), an inverse Fourier transform along the frequency domain dimension, a Fourier transform along the time domain dimension, and a Fourier transform along the antenna domain dimension, it can be transformed into a delay-Doppler-angle dimension (the first dimension).

In this application, a method for determining a path associated with a sensing target in a channel response obtained by measuring a first signal (referred to as a sensing path for short) includes the following steps:

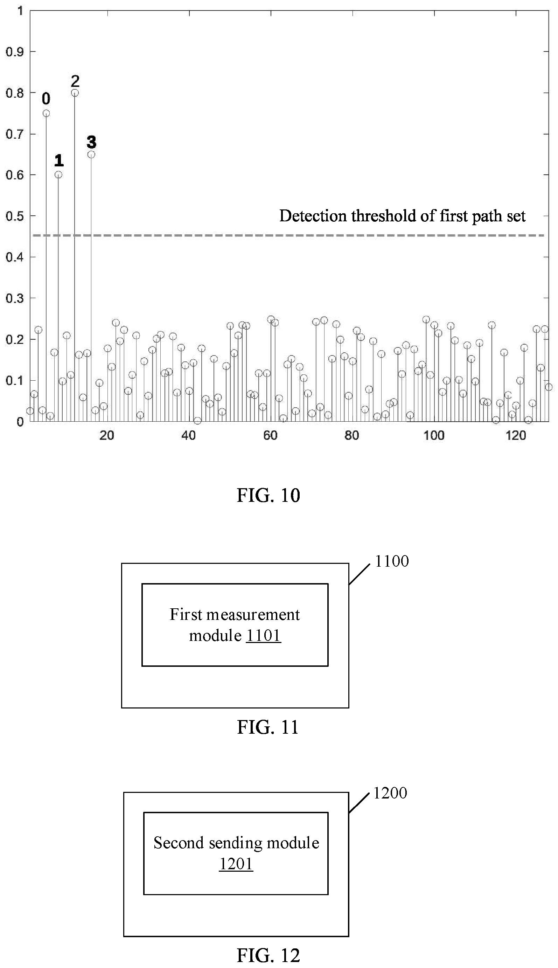

Step 1: A first path set is determined. The paths in the first path set include paths, among all paths after the channel response is transformed into the first dimension, whose amplitude or power or strength or energy exceeds a preset threshold. (For example, in FIG. 10, paths 0, 1, 2, and 3 are paths in the first path set).

Optionally, the preset threshold may be set to be higher than a noise threshold or higher than a noise and interference threshold.

It can be understood that the step of determining the first path set is optional, and the path associated with the sensing target may also be determined only according to step 2.

Step 2: A path that satisfies a first condition is selected from the first path set or from all paths as the path associated with the sensing target.

Optionally, the first condition includes at least one of the following:
1) an amplitude or power or strength or energy of a path exceeds a preset threshold or falls within a preset interval range; for example, the preset threshold is 5 times a noise threshold;
2) a Doppler of the path exceeds a preset threshold or falls within a preset interval range;
3) a delay of the path exceeds a preset threshold or falls within a preset interval range;
4) an angle of the path exceeds a preset threshold or falls within a preset interval range;
5) a difference between the amplitude or power or strength or energy of the path and that of a first-arrival path (e.g., a line-of-sight (LOS) path) or a reference path (e.g., a signal path reflected by a known target (e.g., a reconfigurable intelligence surface (RIS) or a backscatter or another known passive target, etc.)) exceeds a preset threshold or falls within a preset interval range;
6) a Doppler difference between the path and a first-arrival path (e.g., an LOS path) or a reference path (e.g., a signal path reflected by a known target (e.g., an RIS or a backscatter device or another known passive target, etc.)) exceeds a preset threshold or falls within a preset interval range;
7) a delay difference between the path and a first-arrival path (e.g., an LOS path) or a reference path (e.g., a signal path reflected by a known target (e.g., an RIS or a backscatter device or another known passive target, etc.)) exceeds a preset threshold or falls within a preset interval range;
8) an angle difference between the path and a first-arrival path (e.g., an LOS path) or a reference path (e.g., a signal path reflected by a known target (e.g., an RIS or a backscatter device or another known passive target, etc.)) exceeds a preset threshold or falls within a preset interval range;
9) an amplitude or power/strength/energy or phase of the path satisfies a specific modulation rule, where the specific modulation rule is a modulation rule of a tag or a backscatter device or an RIS, i.e., the path associated with the sensing target may be a path modulated and reflected by a tag or a backscatter device or an RIS.

It should be noted that each of the above first conditions may also be based on a result of statistical analysis over a period of time. For example, a proportion of the above indicator (e.g., Doppler of the path, delay of the path, etc.) exceeding a preset threshold or falling within a preset interval range within a preset time window reaches a preset proportion, or a number of times that the above indicator (e.g., Doppler of the path, delay of the path, etc.) exceeds a preset threshold or falls within a preset interval range within a preset time window reaches a preset number of times.

The preset threshold or the preset interval range is sent by another device to a receiving device, and is determined by the another device based on sensing prior information or a sensing requirement. Alternatively, the preset threshold or the preset interval range is determined by a receiving device based on sensing prior information or a sensing requirement.

The sensing prior information or the sensing requirement includes the following information:

### 1) Sensing service or sensing service type

Optionally, the sensing service may include, but is not limited to, at least one of the following: detecting whether a target exists, positioning, speed detection, distance detection, angle detection, acceleration detection, material analysis, composition analysis, shape detection, category classification, radar cross section detection, polarization scattering characteristic detection, fall detection, intrusion detection, quantity statistics, indoor positioning, gesture recognition, lip recognition, gait recognition, expression recognition, facial recognition, respiration monitoring, heart rate monitoring, pulse monitoring, humidity or brightness or temperature or atmospheric pressure monitoring, air quality monitoring, weather condition monitoring, environment reconstruction, terrain and landform, building or vegetation distribution detection, pedestrian flow or vehicle flow detection, crowd density, vehicle density detection, etc. The sensing service type may refer to classification of a plurality of different sensing services according to characteristics. For example, it may be classified by function into detection-type sensing services (e.g., including intrusion detection, fall detection), parameter estimation-type sensing services (e.g., distance, angle, speed calculation), recognition-type sensing services (e.g., action recognition, identity recognition), etc., or classified by sensing range (e.g., short-range sensing, medium-range sensing, long-range sensing), classified by sensing granularity (e.g., coarse-grained sensing, fine-grained sensing), classified by power consumption or energy consumption, classified by resource occupation, etc. If the sensing service is respiration monitoring, a normal respiration frequency corresponding to a person's gender and age may be determined (for example, male: 13-21 times/minute, female: 15-20 times/minute; adult: 12-20 times/minute, child: approximately 30-40 times/minute), which may serve as sensing prior information.

### 2) Sensing target area

Optionally, the sensing target area includes a location area of a sensing object, or a location area where imaging or environment reconstruction needs to be performed. For example, a preset interval range of a delay of a sensing target-associated path is determined according to an approximate location or distance of the sensing object.

### 3) Sensing object type

Optionally, the sensing objects are classified according to possible motion characteristics of the sensing objects, and each sensing object type includes information such as a motion speed range, a motion acceleration range, and a typical RCS range of a typical sensing object.

### 4) Number of sensing targets

Optionally, a camera sensing result can serve as a piece of sensing prior information to obtain the number of sensing targets.

For example, in FIG. 10, paths 0, 1, 2, and 3 are paths in a first path set, where paths 2 and 3 are sensing paths that satisfy a first condition (e.g., their delays satisfy a preset threshold), and paths 0 and 1 are paths associated with other scatterers. In FIG. 10, the horizontal axis is the first dimension, and the vertical axis is the normalized amplitude or power or strength or energy.

For frequency range 1, a reference point of the first indicator may be an antenna connector of a receiving device such as a terminal. For frequency range 1, if the receiving device has a plurality of receive channels, the first indicator measured and reported by the receiving device shall not be lower than the indicator of any single receive channel. For frequency range 2, the first indicator measured by a receive channel needs to be obtained by measuring a combined signal on a plurality of antenna elements corresponding to the receive channel.

In another implementation of this application, a method for calculating the first indicator is as follows:
Optionally, when calculating the received power of the sensing target-associated path, the difference between the power of the sensing target-associated path in the first dimension and ${N}_{1} {P}_{σ}^{avr}$ may also be used as the first indicator, where *N*₁ represents the number of sensing target-associated paths; ${P}_{σ}^{avr}$ is an average power of a plurality of paths outside the first path set in the first dimension.

In an implementation of this application, a method for calculating the received power of the first signal is as follows:
The received power of the first signal may be a sum of powers of all paths in a first path set, which is obtained by: after a receiving device obtains a channel response *H*(*k*), transforming it into a first dimension, determining the first path set in the first dimension, then performing calculation.

In another implementation of this application, a method for calculating the received power of the first signal is as follows:
The received power of the first signal may also be a difference between a sum of powers of all paths in the first path set in the first dimension and ${N}_{2} {P}_{σ}^{avr}$, where *N*₂ represents the number of paths in the first path set.

A method for calculating the total received power is as follows:
Total received power ${P}_{total} = \frac{1}{K} {\sum }_{k = 0}^{K - 1} {\left|Y\left(k\right)\right|}^{2}$.

In an implementation of this application, a method for calculating the third indicator is as follows:
The channel response *H*(*k*) is subjected to a first filtering process to obtain *H*_{*filter*1}(*k*), and then a first filtered received signal *Y*_{*filter*1}(*k*) is calculated according to *H*_{*filter*1}(*k*) and the first signal *X*(*k*)*,* i.e., *Y*_{*filter*1}(*k*) *= H*_{*filter*1}(*k*)*X*(*k*). Then, the received signal *Y*(*k*) is subtracted by the received signal *Y*_{*filter*1}(*k*) after the first filtering process to obtain an interference and noise signal *Y*_{*σ*1}(*k*), i.e., *Y*_{*σ*1}(*k*) = *Y*(*k*) - *Y*_{*filter*1}*(k),* and then the third indicator ${P}_{σ 1} = \frac{1}{K} {\sum }_{k = 0}^{K - 1} {\left|{Y}_{σ 1}\left(k\right)\right|}^{2}$ is calculated.

The first filtering process is used to eliminate noise and interference in the first dimension and paths not associated with the sensing target, for example, the first filtering process sets amplitudes or powers or strengths or energies of paths other than the sensing target-associated path in FIG. 10 to zero,. The channel response *H*_{*filter*1}(*k*) after the first filtering process does not include noise and interference or paths not associated with the sensing target, and includes only the sensing target-associated path.

In an implementation of this application, a method for calculating the fourth indicator is as follows:
The channel response *H*(*k*) is subjected to a second filtering process to obtain *H*_{*fitter*2}(*k*), and then a second filtered received signal *Y*_{*filter*2}*(k)* is calculated according to *H*_{*fitter*2}(*k*) and the first signal *X*(k), i.e., *Y*_{*filter*2}(*k*) *= H*_{*filter*2}(*k*)*X*(*k*). Then, the received signal *Y(k)* is subtracted by the received signal *Y*_{*filter*2}*(k)* after the second filtering process to obtain an interference and noise signal *Y_{σ2}*(*k*), i.e., *Y*_{*σ*2}(*k*) *= Y(k) - Y*_{*filter*2}(*k*), and then the fourth indicator ${P}_{σ 2} = \frac{1}{K} {\sum }_{k = 0}^{K - 1} {\left|{Y}_{σ 2}\left(k\right)\right|}^{2}$ is calculated.

The second filtering process may be a noise and interference suppression process in the first dimension (for example, setting amplitudes or powers or strengths or energies of paths other than the first path set in FIG. 10 to zero), or a minimum mean square error (MMSE) filtering. The channel response *H*_{*filter*2}*(k)* after the second filtering process does not include noise and interference, and includes only paths in the first path set.

In another implementation of this application, a method for calculating the fourth indicator is as follows:
The fourth indicator *P*_{*σ*2} is calculated according to an average power ${P}_{σ}^{avr}$ of a plurality of paths outside the first path set in the first dimension, i.e., ${P}_{σ 2} = {NP}_{σ}^{avr}$, where *N* represents the number of sampling points in the first dimension.

If the receiving device determines that there are a plurality of sensing targets, or the receiving device obtains the number of sensing targets based on sensing prior information or a sensing requirement, the following methods are available:
Method 1: calculate a target indicator for each sensing target separately. For example, in FIG. 10, paths associated with each sensing target are determined separately, and then each target indicator corresponding to each sensing target is calculated separately. When calculating a third indicator corresponding to a sensing target (e.g., sensing target A) at this time, there are two methods: i.e., the third indicator of sensing target A = total received power - the first indicator of sensing target A; or the third indicator of sensing target A = total received power - the first indicator of sensing target A - the first indicator of sensing target B (assuming there are two sensing targets in total: A and B). Similarly, there are also two methods for calculating the fifth indicator: the fifth indicator of sensing target A = RSRP of the first signal - the first indicator of sensing target A; or the fifth indicator of sensing target A = RSRP of the first signal - the first indicator of sensing target A - the first indicator of sensing target B (assuming there are two sensing targets in total: A and B).

Method 2: calculate one target indicator for a plurality of sensing targets. For example, in FIG. 10, paths associated with any sensing target are determined, and then all of these paths are used as paths associated with the sensing target. This is equivalent to treating a plurality of sensing targets as one virtual sensing target, and then calculating a target indicator corresponding to the virtual sensing target.

It can be understood that, when step 601 is executed, the terminal is in an Idle state or an Inactive state, i.e., the terminal can participate in a sensing service without accessing a connected state, thereby reducing energy consumption of the terminal.

In the embodiments of this application, the terminal or the network-side device can determine, according to measurements of a target indicator of one or more first signals, whether the terminal is suitable for participating in a sensing service. The terminal or the network-side device can select, according to the measurements of the target indicator of the one or more first signals, a suitable terminal to participate in the sensing service, ensuring sensing performance.

In the embodiments of this application, before the terminal measures one or more first signals to obtain measurements of a target indicator of the one or more first signals, the method further includes:
receiving, by the terminal, first information sent by a network-side device, where the first information includes a target indicator of the first signal that the terminal needs to measure.

Optionally, after receiving the first information, the terminal may determine whether to measure the first signal.

For example, if the location information of the terminal is consistent with the sensing target area in the sensing requirement carried in the first information, the terminal determines to measure the first signal.

For another example, if the sensing service type supported by the terminal is consistent with the sensing service type in the sensing requirement in the first information, the terminal determines to measure the first signal.

For yet another example, if the terminal finds that it satisfies the time information of the sensing service in the first information (the terminal can participate in sensing during this time period), the terminal determines to measure the first signal.

In an embodiment of this application, if the number of the plurality of first signals is N, the measuring, by the terminal, the plurality of first signals includes:
measuring, by the terminal, the first signals by using different receiving beams.

For example, the first signals are measured by using different receiving beams at different times. At this time, the base station needs to send the same first signal at the different times (i.e., the beam direction of the first signal sent by the base station at the different times remains unchanged).

Optionally, the first signal includes at least one of the following: a dedicated signal for sensing, a sounding reference signal, a preamble, a channel state information - reference signal (CSI-RS), a tracking reference signal (TRS), and a synchronization signal.

Optionally, the bandwidth of the dedicated signal for sensing, the CSI-RS, or the TRS may be configured to be wider than that of a synchronization signal, and the signal is quasi co-located (QCL) with the synchronization signal. For example, the synchronization signal includes a plurality of beams, and each beam is associated with a first signal.

In an embodiment of this application, the method further includes:
determining, by the terminal, whether the measurements of the target indicator of the one or more first signals satisfy a second condition; and
reporting, by the terminal to a network-side device, an identifier of the at least part of first signals in a case that the measurements of the target indicator of at least part of the one or more first signals satisfy the second condition;
   or
skipping initiating, by the terminal, a random access procedure in a case that the measurements of the target indicator of the one or more first signals do not satisfy the second condition, or initiating, by the terminal, a random access procedure and reporting, by means of Message 1 or Message 3 or Message A, to the network-side device that the measurements of the target indicator of the first signal do not satisfy the second condition or that the terminal does not participate in a sensing service, where
the second condition includes at least one of the following:
   1) the measurements of the target indicator are greater than or equal to a fourth threshold;
   2) the measurements of the target indicator are less than or equal to a fifth threshold;
   3) the measurements of the target indicator fall within a third interval range;
   4) a proportion of the measurements of the target indicator being greater than or less than a sixth threshold within a first time window is greater than or equal to a first proportion;
   5) a proportion of the measurements of the target indicator falling within a fourth interval range within a second time window is greater than or equal to a second proportion;
   6) a number of times that the measurements of the target indicator are greater than or less than a seventh threshold within a third time window is greater than or equal to a first number of times;
   7) a number of times that the measurements of the target indicator fall within a fifth interval range within a fourth time window is greater than or equal to a second number of times.

Optionally, the second condition may be notified by the network-side device to the UE through a paging message or an SIB or other signaling.

In an embodiment of this application, random access occasion resources in the sensing-related random access procedure are different from random access occasion resources in the communication-related random access procedure.

In an embodiment of this application, the initiating, by the terminal, a sensing-related random access procedure in a case that the measurements of the target indicator of at least some of the one or more first signals satisfy the second condition includes:
reporting, by the terminal to the network-side device, an identifier of the at least part of first signals in a case that the measurements of the target indicator of at least part of first signals of the one or more first signals satisfy the second condition, and communication link performance of the at least part of first signals satisfies a communication condition.

In an embodiment of this application, the reporting, by the terminal to the network-side device, an identifier of the at least part of first signals includes:
reporting, by the terminal to the network-side device, the identifier of the at least part of first signals by means of Message 1 or Message 3 or Message A.

For example, if the terminal measures ten first signals, and measurements of a target indicator of six first signals satisfy the second condition, then the terminal reports, to the network-side device, identifiers of the six first signals by means of Message 1 or Message 3 or Message A.

In an embodiment of this application, the measurements of the target indicator of the first signal associated with the Message 1 or the Message A do not satisfy the second condition. That is, the terminal measures the first signal or an SSB first, determines a first signal or an SSB that satisfies a communication indicator (e.g., RSRP is greater than a specific threshold), and then sends Message 1 or Message A through a paging occasion (PO) corresponding to the first signal or the SSB that satisfies the communication indicator.

In an embodiment of this application, the method further includes:
receiving, by the terminal, second information by means of Message 2 or Message 4 or Message B, where the second information includes at least one of the following: sensing-related information, configuration information of a second signal, and format information of a measurement quantity fed back by the terminal.

In an embodiment of this application, a preamble in the Message 1 or the Message A is associated with the identifier of the one or more first signals. That is, at this time, the preamble in the Message 1 or the Message A is associated not only with the first signal or the SSB that satisfies the communication indicator, but also with the identifier of the one or more first signals.

In an embodiment of this application, the method further includes:
sending, by the terminal to the network-side device, the measurements of the target indicator of the one or more first signals.

In an embodiment of this application, the sending, by the terminal to a network-side device, the measurements of the target indicator of the one or more first signals includes:
sending, by the terminal to the network-side device, the measurements of the target indicator of the one or more first signals by means of at least one of Message 1, Message 3, Message A, or a physical uplink shared channel PUSCH resource scheduled by a configured grant.

In an embodiment of this application, after the terminal sends the measurements of the target indicator of the one or more first signals to the network-side device through Message 1, Message 3, or Message A, the method further includes:

In an embodiment of this application, the terminal receives third information sent by the network-side device by means of at least one of Message 2, Message 4, or Message B.

In an embodiment of this application, the first information further includes at least one of the following: a sensing requirement, configuration information of the first signal, time information of a sensing service, and a sensing mode (for example, uplink sensing or downlink sensing).

In this application, the sensing requirement information may include at least one of the following:

### 1) Sensing service or sensing service type

Optionally, the sensing service include at least one of the following: detecting whether a target exists, positioning, speed detection, distance detection, angle detection, acceleration detection, material analysis, composition analysis, shape detection, category classification, radar cross section (RCS) detection, polarization scattering characteristic detection, fall detection, intrusion detection, quantity statistics, indoor positioning, gesture recognition, lip recognition, gait recognition, expression recognition, facial recognition, respiration monitoring, heart rate monitoring, pulse monitoring, humidity or brightness or temperature or atmospheric pressure monitoring, air quality monitoring, weather condition monitoring, environment reconstruction, terrain and landform, building/vegetation distribution detection, pedestrian flow or vehicle flow detection, crowd density, vehicle density detection, etc. The sensing service type may refer to classification of a plurality of different sensing services according to a certain characteristic. For example, it may be classified by function into detection-type sensing services (e.g., including intrusion detection or fall detection), parameter estimation-type sensing services (e.g., distance, angle, or speed calculation), recognition-type sensing services (e.g., action recognition or identity recognition), etc., or classified by sensing range (e.g., short-range sensing, medium-range sensing, or long-range sensing), classified by sensing granularity (e.g., coarse-grained sensing or fine-grained sensing), classified by power consumption or energy consumption, classified by resource occupation, etc.

### 2) Sensing target area

Optionally, the sensing target area includes a location area where a sensing object possibly exists, or a location area where imaging or environment reconstruction needs to be performed.

### 3) Sensing object type

Optionally, the sensing object type is used for classifying the sensing objects according to possible motion characteristics of the sensing objects, and each sensing object type includes information such as motion speed, motion acceleration, and typical RCS of typical sensing objects.

### 4) Sensing quality of service (QoS)

Optionally, the sensing QoS is used to represent a performance indicator for sensing a sensing target area or a sensing object, and the sensing QoS includes at least one of the following:

### a) Sensing resolution

Optionally, the sensing resolution includes at least one of the following: distance measurement resolution, angle measurement resolution, speed measurement resolution, imaging resolution, and the like.

### b) Sensing accuracy

Optionally, the sensing accuracy includes at least one of the following: distance measurement accuracy, angle measurement accuracy, speed measurement accuracy, positioning accuracy, and the like.

### c) Sensing range

Optionally, the sensing range includes at least one of the following: distance measurement range, speed measurement range, angle measurement range, imaging range, and the like.

### d) Sensing delay

Optionally, the sensing delay includes a time interval from the sending of the sensing signal to the obtaining of the sensing result, or a time interval from the initiation of the sensing requirement to the obtaining of the sensing result.

### e) Sensing update rate

Optionally, the sensing update rate includes a time interval between two adjacent executions of sensing and obtaining sensing results.

### f) Detection probability

Optionally, the detection probability includes, but is not limited to, a probability that a sensing object is correctly detected when it exists.

### g) False alarm probability

Optionally, the false alarm probability includes, but is not limited to, a probability that a sensing target is falsely detected when no sensing object exists.

### h) Maximum number of perceivable targets

In this application, the configuration information of the first signal or the second signal may include at least one of the following:
1) Signal resource identifier, used to distinguish different signal resource configurations
2) Signal usage
   Optionally, the signal usage is used to indicate whether the signal is a signal used for communication (e.g., channel measurement, channel estimation, synchronization, or data information carrying), or a signal used for sensing, or a signal used for both communication and sensing. Specifically, the signal usage may also be used to indicate for which sensing service the signal is used, or for which sensing service type the signal is used.
3) Waveform
   Optionally, the waveform may be orthogonal frequency division multiplexing (OFDM), single-carrier frequency-division multiple access (SC-FDMA), orthogonal time frequency space (OTFS), frequency modulated continuous wave (FMCW), a pulse signal, etc.
4) Subcarrier spacing
   For example, the subcarrier spacing of an OFDM system is 30 KHz.
5) Guard interval
   Optionally, the guard interval is a time interval from the moment transmission of the signal ends to the moment a latest echo signal of the signal is received. This parameter is proportional to the maximum sensing distance. For example, it may be calculated by *c*/(2*Rₘₐₓ*), where *Rₘₐₓ* is the maximum sensing distance (belonging to sensing requirement information), for example, for a sensing signal that is sent and received by the same device, and *Rₘₐₓ* represents the maximum distance from a transceiver point of the sensing signal to a signal transmission point. In some cases, the cyclic prefix (CP) of OFDM signals can serve as the minimum guard interval. c is the speed of light.
6) Starting frequency-domain position
   Optionally, the starting frequency-domain position may be a starting frequency point, and may be represented by a starting resource element (RE) index or resource block (RB) index.
7) Starting time-domain position
   Optionally, the starting time-domain position may be a starting time point, and may be represented by a starting symbol index, a slot index, or a frame index.
8) Ending frequency-domain position
   Optionally, the ending frequency-domain position may be an ending frequency point, and may be represented by an ending RE or RB index.
9) Ending time-domain position
   Optionally, the stopping time-domain position is an ending time point, and may be represented by an ending RE or RB index.
10) Frequency-domain resource length
   Optionally, the frequency-domain resource length includes a frequency-domain bandwidth, the frequency-domain bandwidth is inversely proportional to a range resolution, and the frequency-domain bandwidth of each of the first signals is *B* ≥ *c*/(2Δ*R*), where c is the speed of light, and Δ*R* is the range resolution.
11) Time-domain resource length
   Optionally, the time-domain resource length includes a burst duration, and the time-domain resource length is inversely proportional to a Doppler resolution.
12) Frequency-domain resource interval
   Optionally, the frequency-domain resource interval represents an interval between adjacent frequency-domain resource units of signals, and may be represented by a number of REs or RBs, or may be represented by a density value (Density). For example, Density=1 indicates that there is one RE in each RB for carrying a signal. The frequency-domain resource interval is inversely proportional to a maximum unambiguous range/delay. For an OFDM system, when subcarriers are mapped contiguously, the frequency-domain interval is equal to a subcarrier spacing.
13) Time-domain resource interval
   Optionally, the time-domain resource interval is a time interval between two adjacent signal resource units, and the time-domain resource interval is associated with a maximum unambiguous Doppler frequency shift or a maximum unambiguous velocity.
14) Time-domain resource characteristic
   Optionally, the time-domain resource characteristic includes, but is not limited to, periodic sending, semi-persistent sending, or aperiodic sending.
15) Signal power
   For example, a value is taken every 2 dBm from -20 dBm to 23 dBm.
16) Sequence information
   The sequence information includes, but is not limited to, at least one of the following: sequence type information (for example, a ZC (Zaddoff Chu) sequence, a pseudorandom noise (PN) sequence, etc.), a sequence generation method, a sequence length, etc.
17) Signal direction
   For example, it is angle information or beam information of signal transmission.
18) Quasi co-location (QCL) relationship
   For example, a sensing signal includes a plurality of resources. Each resource is QCLed with a synchronization signal and PBCH block (SSB), and the QCL includes Type A, Type B, Type C, or Type D.
19) Antenna port information
   For example, it is a maximum number of antenna ports, or an antenna port index.
20) Cyclic prefix information

For example, the cyclic prefix information includes, but is not limited to, at least one of the following: a cyclic prefix type (for example, a normal cyclic prefix (Normal Cyclic Prefix, NCP), an extended cyclic prefix (ECP), or a newly designed cyclic prefix dedicated to sensing measurement, etc.), a cyclic prefix length, etc.

The sensing measurement quantity in this application may include at least one of the following:
a) First-level measurement quantity (received signal or raw channel information), which includes at least one of: a received signal or a channel response complex result, an amplitude or a phase, an I branch or a Q branch, and an operation result thereof.
   The operation includes at least one of addition, subtraction, multiplication, division, matrix addition and subtraction, matrix multiplication, matrix transposition, trigonometric operation, square root operation, power operation, and the like, as well as a threshold detection result, a maximum or minimum value extraction result, and the like of the above operation result. The operations further include at least one of fast Fourier transform (FFT)/inverse fast Fourier transform (IFFT), discrete Fourier transform (DFT) or inverse discrete Fourier transform (IDFT), 2D-FFT, 3D-FFT, matched filtering, autocorrelation operation, wavelet transform, and digital filtering, as well as threshold detection results and maximum/minimum value extraction results, and the like of the above operation result.
b) Second-level measurement quantity (basic measurement quantity), which may include at least one of: a delay, a Doppler, an angle, a strength, and a multi-dimensional combination representation thereof.
c) Third-level measurement quantity (basic attribute or state), which may include at least one of: a distance, a velocity, an orientation, a spatial position, and an acceleration.
d) Fourth-level measurement quantity (advanced attribute or state), which may include at least one of: whether a target exists, a trajectory, an action, an expression, vital signs, a quantity, an imaging result, weather, air quality, a shape, a material, and a composition.

Optionally, the above sensing measurement quantity further includes tag information corresponding to the sensing measurement quantity, and the tag information may include at least one of the following:
(1) Identifier information of the first signal.
(2) Sensing measurement configuration identifier information.
(3) Sensing service information, for example, sensing service identifier (ID), etc.
(4) Data subscription ID.
(5) Measurement quantity usage, for example, communication, sensing, integrated sensing and communication, etc.
(6) Time information.
(7) Sensing node information, for example, a terminal ID, a node position, a device orientation, etc.
(8) Sensing link information, for example, a sensing link sequence number, a transceiver node identifier, etc.
   Optionally, the sensing link information includes: an identifier of a receiving antenna or a receive channel; if it is a sensing measurement quantity of a single receiving antenna or a single receive channel, the identifier is the identifier of the receiving antenna or the receive channel; if it is a result of division or conjugate multiplication of two receiving antennas or two receive channels, the identifier is the identifier of the two receiving antennas or the two receive channels, and an identifier of the division or conjugate multiplication.
(9) Measurement quantity description information.
   For example, it is a form of the measurement quantity, for example, an amplitude value, a phase value, or a complex value combining an amplitude and a phase; a resource type of the measurement quantity, for example, a time-domain measurement result, or a frequency-domain resource measurement result.
(10) Measurement quantity indicator information, for example, a signal to noise ratio (SNR), or a sensing SNR.

In the embodiments of this application, a terminal measures one or more first signals to obtain measurements of a target indicator of the one or more first signals, and the measurements of the target indicator of the first signal can well reflect sensing quality of sensing performed by the terminal according to the first signal.

Referring to FIG. 7, an embodiment of this application provides a sensing processing method, applied to a network-side device, and the specific steps include: step 701.

Step 701: A network-side device sends first information. The first information includes a target indicator of a first signal that a terminal needs to measure.

The target indicator includes at least one of the following (1) to (3):

### (1) First indicator

The first indicator is a linear average of received power of a sensing target-associated path in a channel response obtained by measuring a target signal on a resource unit carrying the target signal (in W).

### (2) Second indicator

The second indicator includes at least one of the following (2a) to (2c):

### (2a) Fourth indicator

The fourth indicator is a sum (in W) of a linear average of power of paths other than the sensing target-associated path in the channel response of the target signal on a target resource and a linear average of power of interference and noise from signals other than the target signal on a first resource. The first resource is the target resource or a resource other than the target resource. The target resource includes a resource unit carrying the first signal, and the resource unit may be a time-domain resource unit or a frequency-domain resource unit.

Optionally, the fourth indicator = total received power - the first indicator. The total received power may be represented as: a linear average (in W) of total received power on the target resource (including received power of signals from a serving cell and non-serving cells, adjacent channel interference, thermal noise, etc.). Alternatively, the total received power = RSSI*K1, where K1 is a coefficient, and a measurement resource of the RSSI is the target resource or another resource (e.g., a resource configured by higher layer signaling).

### (2b) Fifth indicator

The fifth indicator is a linear average of power of interference and noise from the signals other than the target signal on a second resource, and the second resource is the target resource or a resource other than the target resource.

Optionally, the fifth indicator = total received power - received power of the first signal. The received power of the first signal is reference signal received power (RSRP) of the first signal.

### (2c) Sixth indicator

The sixth indicator is a linear average (in W) of power of paths other than the sensing target-associated path in the channel response of the target signal on the target resource.

Optionally, the fourth indicator = RSRP of the first signal - the first indicator.

### (3) Third indicator

The third indicator includes at least one of the following (3a) to (3d):

### (3a) Seventh indicator

The seventh indicator represents the first indicator divided by the fourth indicator, i.e., the seventh indicator = the first indicator/the fourth indicator.

### (3b) Eighth indicator

The eighth indicator represents the first indicator divided by the fifth indicator, i.e., the eighth indicator = the first indicator/the fifth indicator.

### (3c) Ninth indicator

The ninth indicator represents the first indicator divided by the sixth indicator, i.e., the ninth indicator = the first indicator/the sixth indicator.

### (3d) Tenth indicator

The tenth indicator represents the first indicator divided by a first received power and then multiplied by a preset first coefficient, where the first received power represents total received power on a target resource, or the first received power represents a product of a received signal strength indication (RSSI) and a preset second coefficient, and a measurement resource of the RSSI is the target resource or another resource, i.e., the tenth indicator = K2 * the first indicator / total received power, where K2 is a coefficient.

Optionally, the network-side device transmits the first information by means of a paging message or a system information block (SIB) or other signaling; or the network-side device transmits, by means of a paging message or an SIB or other signaling, a part of the content included in the first information respectively.

Optionally, the network-side device selects a target terminal according to a sensing capability situation reported by the terminal (for example, including a sensing service type supported by the terminal or a sensing mode, etc.), a sensing subscription situation of the terminal (for example, whether the terminal supports performing downlink-based sensing in an Idle state or an inactive state), and the like and sends the first information to the target terminal.

In an embodiment of this application, before the network-side device sends the first information, the method further includes:
receiving, by the network-side device, a sensing requirement sent by another device (e.g., a sensing function).

In an embodiment of this application, after the network-side device sends the first information, the method further includes:
receiving, by the network-side device, an identifier of a target first signal by means of Message 1 or Message 3 or Message A, where measurements of a target indicator of the target first signal satisfy a second condition, where
the second condition includes at least one of the following:
   1) the measurements of the target indicator are greater than or equal to a fourth threshold;
   2) the measurements of the target indicator are less than or equal to a fifth threshold;
   3) the measurements of the target indicator fall within a third interval range;
   4) a proportion of the measurements of the target indicator being greater than or less than a sixth threshold within a first time window is greater than or equal to a first proportion;
   5) a proportion of the measurements of the target indicator falling within a fourth interval range within a second time window is greater than or equal to a second proportion;
   6) a number of times that the measurements of the target indicator are greater than or less than a seventh threshold within a third time window is greater than or equal to a first number of times;
   7) a number of times that the measurements of the target indicator fall within a fifth interval range within a fourth time window is greater than or equal to a second number of times.

In an embodiment of this application, the method further includes:
sending, by the network-side device, second information by means of Message 2 or Message 4 or Message B, where the second information includes at least one of the following: sensing-related information, configuration information of a second signal, and format information of a measurement quantity fed back by the terminal.

In an embodiment of this application, after the network-side device sends the first information, the method further includes:
receiving, by the network-side device, measurements of a target indicator of one or more first signals sent by the terminal.

In an embodiment of this application, after the network-side device receives measurements of a target indicator of one or more first signals sent by the terminal, the method further includes:
determining, by the network-side device, whether the measurements of the target indicator of the one or more first signals satisfy a third condition; and
sending, to the terminal, third information in a case that the measurements of the target indicator of at least part of the one or more first signals satisfy the third condition, where the third information is used to instruct the terminal to participate in a sensing service;
the third condition includes at least one of the following:
   1) the measurements of the target indicator are greater than or equal to an eighth threshold;
   2) the measurements of the target indicator are less than or equal to a ninth threshold;
   3) the measurements of the target indicator fall within a sixth interval range;
   4) a proportion of the measurements of the target indicator being greater than or less than a tenth threshold within a fifth time window is greater than or equal to a third proportion;
   5) a proportion of the measurements of the target indicator falling within a seventh interval range within a sixth time window is greater than or equal to a fourth proportion;
   6) a number of times that the measurements of the target indicator are greater than or less than an eleventh threshold within a seventh time window is greater than or equal to a third number of times;
   7) a number of times that the measurements of the target indicator fall within an eighth interval range within an eighth time window is greater than or equal to a fourth number of times.

Optionally, the third condition may be notified by a sensing function to the network-side device, or may be determined by the network-side device according to a sensing requirement.

In an embodiment of this application, the receiving, by the network-side device, measurements of a target indicator of one or more first signals sent by the terminal includes:
receiving, by the network-side device, the measurements of the target indicator of the one or more first signals sent by the terminal by means of at least one of Message 1, Message 3, Message A, or a PUSCH resource scheduled by a configured grant.

In an embodiment of this application, sending third information to the terminal includes:
sending, by the network-side device, the third information to the terminal by means of at least one of Message 2, Message 4, or Message B.

In the embodiments of this application, the network-side device sends first information to the terminal, where the first information includes a target indicator of a first signal that the terminal needs to measure, so that the terminal can measure one or more first signals to obtain measurements of the target indicator of the one or more first signals, and the measurements of the target indicator of the first signal can well reflect sensing quality of sensing performed by the terminal according to the first signal.

The following describes the implementations of this application with reference to specific embodiments.

### Embodiment 1

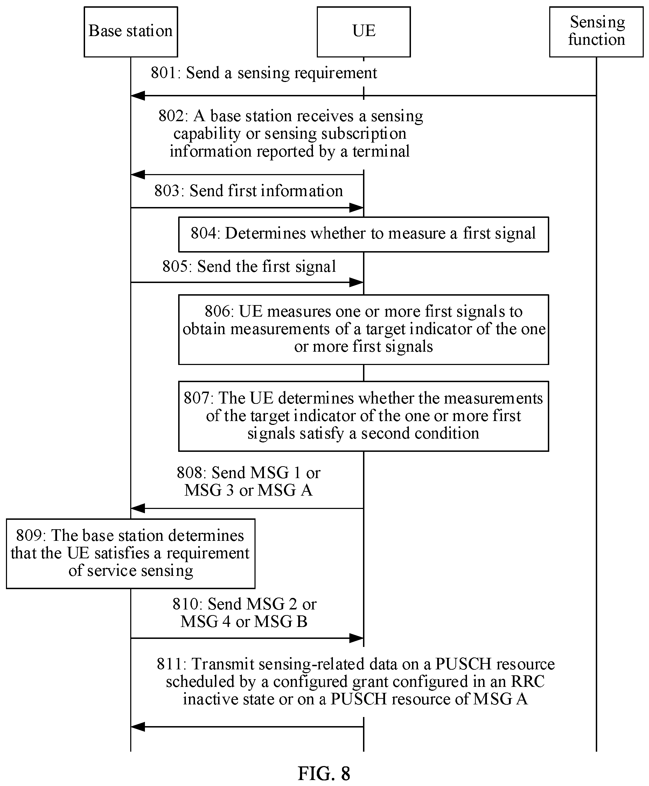

Referring to FIG. 8, specific steps include:
Step 801: A sensing function sends a sensing requirement to a base station.
Step 802: The base station receives a sensing capability or sensing subscription information reported by a terminal.
Step 803: The base station sends first information to a UE according to at least one of the sensing requirement, the sensing capability, or the sensing subscription information.

Optionally, the sensing capability includes a sensing service type supported by the UE or a sensing mode supported by the UE.

Optionally, the sensing subscription information may include, but is not limited to, whether the UE supports performing downlink-based sensing in an idle state or an inactive state.

The UE is in an idle state or an inactive state.

Optionally, the first information includes at least one of the following: a sensing requirement, configuration information of the first signal, time information of a sensing service, and a sensing mode (for example, uplink sensing or downlink sensing).

Step 804: The UE determines whether to measure the first signal according to the first information.

For example, if the location information of the UE (which may be location information obtained by the UE through downlink positioning) is consistent with the sensing target area in the sensing requirement carried in the first information, the UE determines to measure the first signal. For another example, if the sensing service type supported by the UE is consistent with the sensing service type in the sensing requirement in the first information, the UE determines to measure the first signal. For yet another example, if the UE finds that it satisfies the time information of the sensing service in the first message (the UE can participate in sensing during this time period), the UE determines to measure the first signal.

Step 805: The base station sends a first signal to the UE.

Step 806: The UE measures one or more first signals to obtain measurements of a target indicator of the one or more first signals.

Step 807: The UE determines whether the measurements of the target indicator of the one or more first signals satisfy a second condition.

Optionally, the second condition is notified by the base station to the UE through a paging message or a SIB or other signaling.

Step 808: In a case that the measurements of the target indicator of at least some of the one or more first signals satisfy the second condition, the UE sends, to the base station, the measurements of the target indicator of the at least some first signals by means of MSG 1 or MSG 3 or MSG A.

It can be understood that if the terminal determines that the measurements of the target indicator of the one or more first signals do not satisfy the second condition, the terminal does not send MSG 1 or MSG 3 or MSG A.

In an implementation, the UE reports, to the base station through MSG 1, MSG 3, or MSG A, an index of one or more first signals whose measurements of the target indicator satisfy a preset condition. For example, the UE reports, through a PUSCH in MSG 3 or MSG A, an index of a first signal whose measurements of the target indicator satisfy the second condition.

In another implementation, a sending parameter of a preamble of MSG 1 or MSG A sent by the terminal (for example, the sending parameter includes a time-domain resource, a frequency-domain resource, a preamble sequence format, etc.) is associated with the index of the first signal.

In this embodiment, if the UE initiates a random access procedure due to a communication requirement (for example, there is uplink data to be transmitted), the UE sends a communication-related preamble. For design simplicity, sensing-related RO resources and communication-related RO resources may be independent.

Step 809: The base station determines that the UE satisfies the requirement of the service sensing.

Step 810: The base station sends sensing-related information to the UE by means of MSG 2 or MSG 4 or MSG B.

Optionally, the sensing-related information includes, but is not limited to, configuration information of a second signal, format information of a measurement quantity to be fed back by the UE, and the like. The second signal may be the same as or different from the first signal.

Step 811: Sensing-related data is transmitted on a PUSCH resource scheduled by a configured grant configured in an RRC inactive state or on a PUSCH resource of MSG A.

In this embodiment, after receiving MSG 1 or MSG A sent by the UE, the base station determines that the UE satisfies the requirement of the sensing service, and may subsequently instruct the UE to formally participate in sensing. For example, the UE may transmit sensing-related data, such as a sensing measurement quantity, on a MSG 3 PUSCH in a contention-based four-step random access procedure, or on a MSG A PUSCH in a two-step random access procedure, or on a PUSCH resource scheduled by a configured grant configured in an RRC inactive state. The base station may transmit sensing-related information through MSG 2, MSG 4, or MSG B, etc.

### Embodiment 2

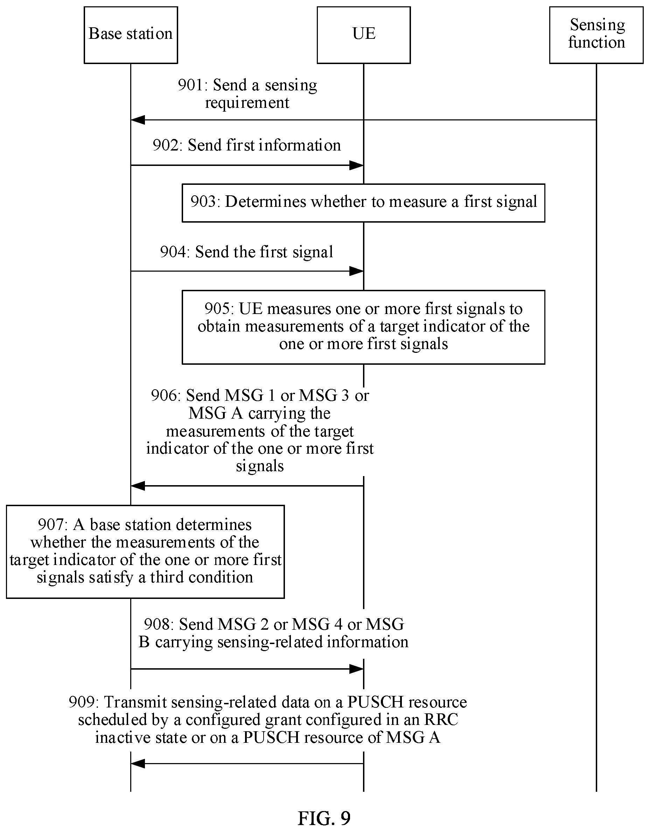

Referring to FIG. 9, specific steps include the following steps:
Step 901: A sensing function sends a sensing requirement to a base station.
Step 902: The base station sends first information to a UE.
Step 903: The UE determines whether to measure the first signal according to the first information.
Step 904: The base station sends a first signal to the UE.
Step 905: The UE measures one or more first signals to obtain measurements of a target indicator of the one or more first signals.
Step 906: The UE sends, to the base station, measurements of a target indicator of one or more first signals by means of MSG 1 or MSG A.
Step 907: The base station determines whether the measurements of the target indicator of the one or more first signals satisfy a third condition. If so, the base station selects the UE to participate in the sensing service (perform step 908). Otherwise, it does not select the UE to participate in the sensing service.
   Optionally, the third condition may be notified by a sensing function to the base station, or may be determined by the base station according to a sensing requirement.
Step 908: The base station sends sensing-related information to the UE by means of MSG 2 or MSG 4 or MSG B.
Step 909: Sensing-related data is transmitted on a PUSCH resource scheduled by a configured grant configured in an RRC inactive state or on a PUSCH resource of MSG A.

In an implementation, a UE reports the measurements of the target indicator to the base station through MSG 1, and the base station determines whether to select the UE. If the base station selects the UE, the base station transmits sensing-related information through MSG 2 or MSG 4, and the like, for example, configuration information of a second signal that the UE needs to measure, format information of a measurement quantity that the UE needs to feed back, etc. The UE may transmit sensing-related data, such as a sensing measurement quantity, on a MSG 3 PUSCH in a contention-based four-step random access procedure, or on a PUSCH resource scheduled by a configured grant configured in an RRC inactive state.

In another implementation, a UE reports the measurements of the target indicator to the base station through MSG 3, and the base station determines whether to select the UE. If the base station selects the UE, the base station transmits sensing-related information through MSG 4, and the like, for example, configuration information of a second signal that the UE needs to measure, format information of a measurement quantity that the UE needs to feed back, etc. The UE may transmit sensing-related data, such as a sensing measurement quantity, on a PUSCH resource scheduled by a configured grant configured in an RRC inactive state.

It can be understood that before the UE sends MSG 3, the UE and the base station complete the transmission of MSG 1 and MSG 2 respectively.

In yet another implementation, a UE reports the measurements of the target indicator to the base station through a PUSCH of MSG A, and the base station determines whether to select the UE. If the base station selects the UE, the base station transmits sensing-related information through MSG B, for example, configuration information of a second signal that the UE needs to measure, format information of a measurement quantity that the UE needs to feed back, etc. The UE may transmit sensing-related data, such as a sensing measurement quantity, on a PUSCH resource scheduled by a configured grant configured in an RRC inactive state or on a PUSCH resource of a subsequent MSG A.

Referring to FIG. 11, an embodiment of this application provides a sensing processing apparatus, applied to a terminal. The apparatus 1100 includes:
a first measurement module 1101, configured to measure one or more first signals to obtain measurements of a target indicator of the one or more first signals.

The target indicator includes at least one of the following (1) to (3):

### (1) First indicator

The first indicator is a linear average of received power of a sensing target-associated path in a channel response obtained by measuring a target signal on a resource unit carrying the target signal (in W).

### (2) Second indicator

The second indicator includes at least one of the following (2a) to (2c):

### (2a) Fourth indicator

The fourth indicator is a sum (in W) of a linear average of power of paths other than the sensing target-associated path in the channel response of the target signal on a target resource and a linear average of power of interference and noise from signals other than the target signal on a first resource. The first resource is the target resource or a resource other than the target resource. The target resource includes a resource unit carrying the first signal, and the resource unit may be a time-domain resource unit or a frequency-domain resource unit.

Optionally, the fourth indicator = total received power - the first indicator. The total received power may be represented as: a linear average (in W) of total received power on the target resource (including received power of signals from a serving cell and non-serving cells, adjacent channel interference, thermal noise, etc.). Alternatively, the total received power = RSSI*K1, where K1 is a coefficient, and a measurement resource of the RSSI is the target resource or another resource (e.g., a resource configured by higher layer signaling).

### (2b) Fifth indicator

The fifth indicator is a linear average of power of interference and noise from the signals other than the target signal on a second resource, and the second resource is the target resource or a resource other than the target resource.

Optionally, the fifth indicator = total received power - received power of the first signal. The received power of the first signal is reference signal received power (RSRP) of the first signal.

### (2c) Sixth indicator

The sixth indicator is a linear average (in W) of power of paths other than the sensing target-associated path in the channel response of the target signal on the target resource.

Optionally, the fourth indicator = RSRP of the first signal - the first indicator.

### (3) Third indicator

The third indicator includes at least one of the following (3a) to (3d):

### (3a) Seventh indicator

The seventh indicator represents the first indicator divided by the fourth indicator, i.e., the seventh indicator = the first indicator/the fourth indicator.

### (3b) Eighth indicator

The eighth indicator represents the first indicator divided by the fifth indicator, i.e., the eighth indicator = the first indicator/the fifth indicator.

### (3c) Ninth indicator

The ninth indicator represents the first indicator divided by the sixth indicator, i.e., the ninth indicator = the first indicator/the sixth indicator.

### (3d) Tenth indicator

The tenth indicator represents the first indicator divided by a first received power and then multiplied by a preset first coefficient, where the first received power represents total received power on a target resource, or the first received power represents a product of a received signal strength indication (RSSI) and a preset second coefficient, and a measurement resource of the RSSI is the target resource or another resource, i.e., the tenth indicator = K2 * the first indicator / total received power, where K2 is a coefficient.

In an implementation of this application, a method for acquiring the sensing target-associated path includes:
performing, based on a target signal and a received signal corresponding to the target signal, channel estimation to obtain a channel response;
transforming the channel response into a first dimension; and
determining a sensing target-associated path from paths corresponding to the first dimension.

The first dimension includes at least one of the following: a delay dimension; a Doppler dimension; an azimuth angle dimension; an elevation angle dimension.

In an implementation of this application, determining a sensing target-associated path from paths corresponding to the first dimension includes:
selecting a path satisfying a first condition as the sensing target-associated path from the paths corresponding to the first dimension, where
the first condition includes at least one of the following:
   1) a first parameter of the path is greater than or equal to a first threshold or falls within a first interval range;
   2) a difference between the first parameter of the path and that of a first-arrival path or a reference path is greater than or equal to a second threshold or falls within a second interval range;
   3) a second parameter of the path satisfies a preset modulation rule, where
the first parameter includes at least one of the following: amplitude, power, strength, energy, Doppler, delay, and angle;
the second parameter includes at least one of the following: amplitude, power, strength, energy, and phase.

In an implementation of this application, selecting a path satisfying a second condition as the sensing target-associated path from the paths corresponding to the first dimension includes:
determining a first path set from the paths corresponding to the first dimension, where a third parameter of each path in the first path set is greater than or equal to a third threshold, and the third parameter includes at least one of the following: amplitude, power, strength, energy; and
determining, from the first path set, a path satisfying a first condition as the sensing target-associated path.

In an embodiment of this application, the apparatus further includes:
a first receiving module, configured to receive first information sent by a network-side device, where the first information includes a target indicator of the first signal that the terminal needs to measure.

In an embodiment of this application, the first measurement module 1001 is further configured to:
respectively measure the N first signals by using N receiving beams, where N is an integer greater than 1.

In an embodiment of this application, the apparatus further includes:
a first determination module, configured to determine whether the measurements of the target indicator of the one or more first signals satisfy a second condition; and
a first processing module, configured to report, to a network-side device, an identifier of the at least part of first signals in a case that the measurements of the target indicator of at least part of the one or more first signals satisfy the second condition;
   or
a second processing module, configured to skip initiating a random access procedure , in a case that the measurements of the target indicator of the one or more first signals do not satisfy the second condition, or the terminal initiates a random access procedure and reporting, by means of Message 1 or Message 3 or Message A, to the network-side device that the measurements of the target indicator of the first signal do not satisfy the second condition or that the terminal does not participate in a sensing service, where
the second condition includes at least one of the following:
   1) the measurements of the target indicator are greater than or equal to a fourth threshold;
   2) the measurements of the target indicator are less than or equal to a fifth threshold;
   3) the measurements of the target indicator fall within a third interval range;
   4) a proportion of the measurements of the target indicator being greater than or less than a sixth threshold within a first time window is greater than or equal to a first proportion;
   5) a proportion of the measurements of the target indicator falling within a fourth interval range within a second time window is greater than or equal to a second proportion;
   6) a number of times that the measurements of the target indicator are greater than or less than a seventh threshold within a third time window is greater than or equal to a first number of times;
   7) a number of times that the measurements of the target indicator fall within a fifth interval range within a fourth time window is greater than or equal to a second number of times.

Optionally, the second condition is notified by the network-side device to the UE through a paging message or an SIB or other signaling.

In an embodiment of this application, random access occasion resources in the sensing-related random access procedure are different from random access occasion resources in the communication-related random access procedure.

In an embodiment of this application, the first processing module is further configured to: report, to the network-side device, an identifier of the at least part of first signals in a case that the measurements of the target indicator of at least part of first signals of the one or more first signals satisfy the second condition, and communication link performance of the at least part of first signals satisfies a communication condition.

In an embodiment of this application, reporting, to the network-side device, an identifier of the at least part of first signals includes:
reporting, to the network-side device, the identifier of the at least part of first signals by means of Message 1 or Message 3 or Message A.

In an embodiment of this application, a preamble in the Message 1 or the Message A is associated with the identifier of the one or more first signals.

In an embodiment of this application, the apparatus further includes:
a first sending module, configured to send, to the network-side device, the measurements of the target indicator of the one or more first signals.

In an embodiment of this application, the first sending module is further configured to: send, to the network-side device, the measurements of the target indicator of the one or more first signals by means of at least one of Message 1, Message 3, Message A, or a PUSCH resource scheduled by a configured grant.

In an embodiment of this application, the apparatus further includes:
a second receiving module, configured to receive second information by means of Message 2 or Message 4 or Message B, where the second information includes at least one of the following: sensing-related information, configuration information of a second signal, and format information of a measurement quantity fed back by the terminal.

In an embodiment of this application, the first information further includes at least one of the following: a sensing requirement, configuration information of the first signal, time information of a sensing service, and a sensing mode (for example, uplink sensing or downlink sensing).

The apparatus provided in the embodiment of this application can implement the various processes implemented in the method embodiment in FIG. 6 and achieve the same technical effect, which will not be repeated here in order to avoid repetition.

Referring to FIG. 12, an embodiment of this application provides a sensing processing apparatus, applied to a network-side device. The apparatus 1200 includes:
a second sending module 1201, configured to send first information, where the first information includes a target indicator of a first signal that a terminal needs to measure.

The target indicator includes at least one of the following (1) to (3):

### (1) First indicator

The first indicator is a linear average of received power of a sensing target-associated path in a channel response obtained by measuring a target signal on a resource unit carrying the target signal (in W).

### (2) Second indicator

The second indicator includes at least one of the following (2a) to (2c):

### (2a) Fourth indicator

The fourth indicator is a sum (in W) of a linear average of power of paths other than the sensing target-associated path in the channel response of the target signal on a target resource and a linear average of power of interference and noise from signals other than the target signal on a first resource. The first resource is the target resource or a resource other than the target resource. The target resource includes a resource unit carrying the first signal, and the resource unit may be a time-domain resource unit or a frequency-domain resource unit.

Optionally, the fourth indicator = total received power - the first indicator. The total received power may be represented as: a linear average (in W) of total received power on the target resource (including received power of signals from a serving cell and non-serving cells, adjacent channel interference, thermal noise, etc.). Alternatively, the total received power = RSSI*K1, where K1 is a coefficient, and a measurement resource of the RSSI is the target resource or another resource (e.g., a resource configured by higher layer signaling).

### (2b) Fifth indicator

The fifth indicator is a linear average of power of interference and noise from the signals other than the target signal on a second resource, and the second resource is the target resource or a resource other than the target resource.

Optionally, the fifth indicator = total received power - received power of the first signal. The received power of the first signal is reference signal received power (RSRP) of the first signal.

### (2c) Sixth indicator

The sixth indicator is a linear average (in W) of power of paths other than the sensing target-associated path in the channel response of the target signal on the target resource.

Optionally, the fourth indicator = RSRP of the first signal - the first indicator.

### (3) Third indicator

The third indicator includes at least one of the following (3a) to (3d):

### (3a) Seventh indicator

The seventh indicator represents the first indicator divided by the fourth indicator, i.e., the seventh indicator = the first indicator/the fourth indicator.

### (3b) Eighth indicator

The eighth indicator represents the first indicator divided by the fifth indicator, i.e., the eighth indicator = the first indicator/the fifth indicator.

### (3c) Ninth indicator

The ninth indicator represents the first indicator divided by the sixth indicator, i.e., the ninth indicator = the first indicator/the sixth indicator.

### (3d) Tenth indicator

The tenth indicator represents the first indicator divided by a first received power and then multiplied by a preset first coefficient, where the first received power represents total received power on a target resource, or the first received power represents a product of a received signal strength indication (RSSI) and a preset second coefficient, and a measurement resource of the RSSI is the target resource or another resource, i.e., the tenth indicator = K2 * the first indicator / total received power, where K2 is a coefficient.

Optionally, the network-side device transmits the first information by means of a paging message or a system information block (SIB) or other signaling; or the network-side device transmits, by means of a paging message or an SIB or other signaling, a part of the content included in the first information respectively.

Optionally, the network-side device selects a target terminal according to a sensing capability situation reported by the terminal (for example, including a sensing service type supported by the terminal or a sensing mode, etc.), a sensing subscription situation of the terminal (for example, whether the terminal supports performing downlink-based sensing in an Idle state or an inactive state), and the like and sends the first information to the target terminal.

In an embodiment of this application, the apparatus further includes:
a third receiving module, configured to receive an identifier of a target first signal by means of Message 1 or Message 3 or Message A, where measurements of a target indicator of the target first signal satisfy a second condition, where
the second condition includes at least one of the following:
   1) the measurements of the target indicator are greater than or equal to a fourth threshold;
   2) the measurements of the target indicator are less than or equal to a fifth threshold;
   3) the measurements of the target indicator fall within a third interval range;
   4) a proportion of the measurements of the target indicator being greater than or less than a sixth threshold within a first time window is greater than or equal to a first proportion;
   5) a proportion of the measurements of the target indicator falling within a fourth interval range within a second time window is greater than or equal to a second proportion;
   6) a number of times that the measurements of the target indicator are greater than or less than a seventh threshold within a third time window is greater than or equal to a first number of times;
   7) a number of times that the measurements of the target indicator fall within a fifth interval range within a fourth time window is greater than or equal to a second number of times.

In an embodiment of this application, the apparatus further includes:
a third sending module, configured for the network-side device to send second information by means of Message 2 or Message 4 or Message B, where the second information includes at least one of the following: sensing-related information, configuration information of a second signal, and format information of a measurement quantity fed back by the terminal.

In an embodiment of this application, the apparatus further includes:
a fourth receiving module, configured to receive measurements of a target indicator of one or more first signals sent by the terminal.

In an embodiment of this application, the apparatus further includes:
a second determination module, configured to determine whether the measurements of the target indicator of the one or more first signals satisfy a third condition; and
a fourth sending module, configured to send, to the terminal, third information in a case that the measurements of the target indicator of at least part of the one or more first signals satisfy the third condition, where the third information is used to instruct the terminal to participate in a sensing service;
the third condition includes at least one of the following:
   1) the measurements of the target indicator are greater than or equal to an eighth threshold;
   2) the measurements of the target indicator are less than or equal to a ninth threshold;
   3) the measurements of the target indicator fall within a sixth interval range;
   4) a proportion of the measurements of the target indicator being greater than or less than a tenth threshold within a fifth time window is greater than or equal to a third proportion;
   5) a proportion of the measurements of the target indicator falling within a seventh interval range within a sixth time window is greater than or equal to a fourth proportion;
   6) a number of times that the measurements of the target indicator are greater than or less than an eleventh threshold within a seventh time window is greater than or equal to a third number of times;
   7) a number of times that the measurements of the target indicator fall within an eighth interval range within an eighth time window is greater than or equal to a fourth number of times.

Optionally, the third condition may be notified by a sensing function to the network-side device, or may be determined by the network-side device according to a sensing requirement.

In an embodiment of this application, the fourth receiving module is further configured to: receive, by means of at least one of Message 1, Message 3, Message A, or a PUSCH resource scheduled by a configured grant, the measurements of the target indicator of the one or more first signals sent by the terminal.

In an embodiment of this application, the fourth sending module is further configured to: send the third information to the terminal by means of at least one of Message 2, Message 4, or Message B.

The apparatus provided in the embodiment of this application can implement the various processes implemented in the method embodiment in FIG. 7 and achieve the same technical effect, which will not be repeated here in order to avoid repetition.

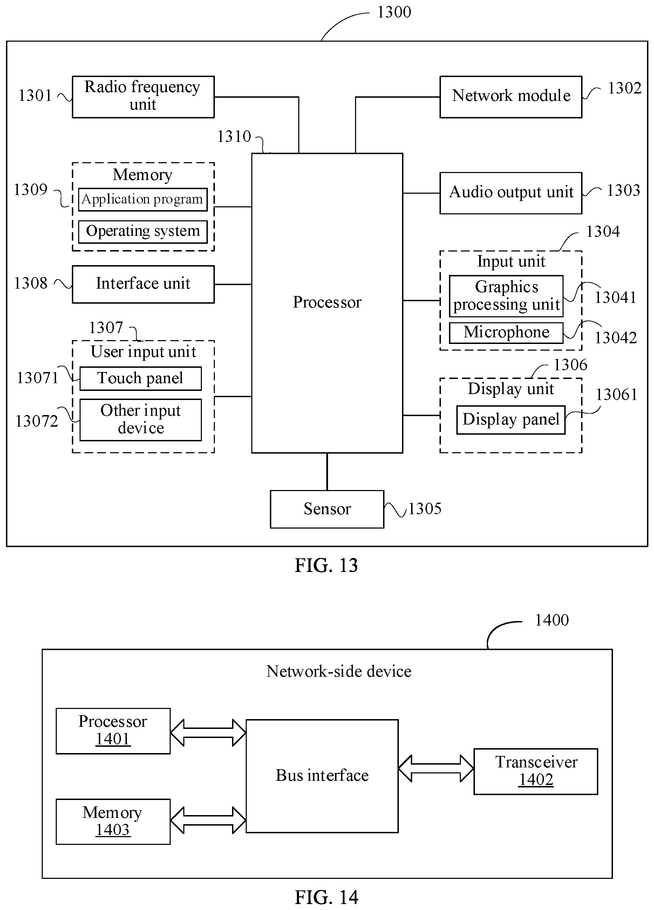

FIG. 13 is a schematic diagram of a hardware structure of a terminal according to an embodiment of this application. The terminal 1300 includes, but is not limited to, at least part of a radio frequency unit 1301, a network module 1302, an audio output unit 1303, an input unit 1304, a sensor 1305, a display unit 1306, a user input unit 1307, an interface unit 1308, a memory 1309, a processor 1310, etc.

It can be understood by those skilled in the art that the terminal 1300 may further include a power supply (such as a battery) for supplying power to the components. The power supply may be logically connected to the processor 1310 by a power supply management system, thus implementing functions such as charging, discharging, and power consumption management by using the power supply management system. The terminal structure illustrated in FIG. 13 constitutes no limitation on the terminal, and he terminal may include more or fewer components than those illustrated therein, or some components may be combined, or a different component deployment may be used, which will not be repeated here.

It is to be understood that in the embodiments of this application, the input unit 1304 may include a graphics processing unit (GPU) 13041 and a microphone 13042. The graphics processing unit 13041 performs processing on image data of a static picture or a video that is obtained by an image acquisition device (for example, a camera) in a video acquisition mode or an image acquisition mode. The display unit 1306 may include a display panel 13061. The display panel 13061 may be configured in the form of liquid crystal display, organic light emitting diode, or the like. Specifically, the user input unit 1307 includes at least one of a touch panel 13071 and another input device 13072. The touch panel 13071 is also known as touch screen. The touch panel 13071 may include two parts, namely a touch detection apparatus and a touch controller. The other input device 13072 may include, but is not limited to, a physical keyboard, a functional key (such as a volume control key or an on/off key), a track ball, a mouse, and a joystick, which will not be repeated here.

In the embodiment of this application, after receiving downlink data from a network-side device, the radio frequency unit 1301 may transmit the data to the processor 1310 for processing. In addition, the radio frequency unit 1301 may transmit uplink data to the network-side device. Generally, the radio frequency unit 1301 includes, but is not limited to, an antenna, an amplifier, a transceiver, a coupler, a low noise amplifier, a duplexer, and the like.

The memory 1309 may be configured to store a software program or instruction and various data. The memory 1309 may mainly include a first storage area and a second storage area for storing a program or instruction. The first storage area may store an operating system, an application program or instruction required by at least one function (for example, a sound playback function or an image display function), and the like. In addition, the memory 1309 may include a volatile memory or a non-volatile memory, or alternatively, the memory 1309 may include a non-transitory memory. The non-volatile memory or the non-transitory memory may be a read-only memory (ROM), a programmable ROM (PROM), an erasable PROM (EPROM), an electrically EPROM (EEPROM), or a flash memory. The volatile memory may be a random access memory (RAM), a static RAM (SRAM), a dynamic RAM (DRAM), a synchronous DRAM (SDRAM), a double data rate SDRAM (DDRSDRAM), an enhanced SDRAM (ESDRAM), a synchronous link DRAM (SLDRAM), or a direct rambus RAM (DRRAM). The memory 1309 in the embodiment of this application includes, but is not limited to, these memories and any other suitable types.

The processor 1310 may include one or more processing units. Optionally, the processor 1310 may integrate an application processor and a modem processor, where the application processor mainly processes operations involving an operating system, a user interface, an application program, and the like, and the modem processor mainly processes a wireless communication signal, for example, a baseband processor. It can be understood that the foregoing modem processor may not be integrated into the processor 1310.

The terminal provided in the embodiment of this application can implement the various processes implemented in the method embodiment in FIG. 6 and achieve the same technical effect, which will not be repeated here in order to avoid repetition.

Please refer to FIG. 14. FIG. 14 is a structural diagram of a network-side device to which an embodiment of the present invention is applied.

As shown in FIG. 14, the network-side device 1400 includes: a processor 1401, a transceiver 1402, a memory 1403, and a bus interface, where the processor 1401 may be responsible for managing a bus architecture and general processing; the memory 1403 may store data used by the processor 1401 when performing operations.

In an embodiment of the present disclosure, the network-side device 1400 further includes: a program stored in the memory 1403 and runnable on the processor 1301, where the program, when executed by the processor 1301, implements the steps of the method shown in FIG. 7 above.

In FIG. 14, the bus architecture may include any number of interconnected buses and bridges, specifically linking together various circuits of one or more processors represented by the processor 1401 and a memory represented by the memory 1403. The bus architecture may also link together various other circuits such as peripherals, voltage regulators, power management circuits, etc., all of which are well known in the art, and therefore, further description thereof is omitted herein. The bus interface provides an interface. The transceiver 1302 may be a plurality of components, i.e., including a transmitter and a receiver, providing a unit for communicating with various other devices on a transmission medium.

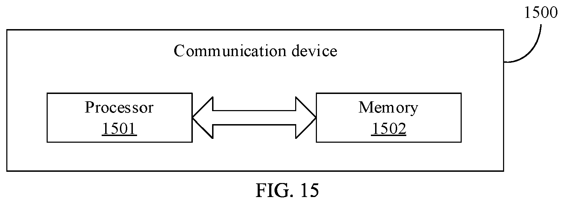

As shown in FIG. 15, an embodiment of this application further provides a communication device 1500. The communication device may be a terminal or a network-side device. The communication device includes a processor 1501 and a memory 1502. The memory 1502 stores a program or an instruction that is runnable on the processor 1501. The program or the instruction, when executed by the processor 1501, implements the steps of the method embodiments of FIG. 6 or FIG. 7 described above, and can achieve the same technical effect, which will not be repeated here in order to avoid repetition.

An embodiment of this application further provides a readable storage medium. A program or instruction is stored on the readable storage medium. The program or the instruction, when executed by the processor, implements the various processes of the method in FIG. 6 or FIG. 7 and the above embodiments, and can achieve the same technical effect, which will not be repeated here in order to avoid repetition.

The processor is the processor in the terminal or the network-side device described in the above embodiments. The readable storage medium may include a computerreadable storage medium, such as a Read-Only Memory (ROM), a Random Access Memory (RAM), a magnetic disk, an optical disc, or the like. In some examples, the readable storage medium may be a non-transitory readable storage medium.

An embodiment of this application further provides a chip. The chip includes a processor and a communication interface coupled to the processor. The processor is configured to run a program or an instruction to implement the various processes of the method embodiment in FIG. 6 or FIG. 7, and can achieve the same technical effect, which will not be repeated here in order to avoid repetition.

It is to be understood that the chip provided in the embodiment of this application may also be referred to as system level chip, system chip, chip system, or system on chip.

An embodiment of this application further provides a computer program/program product. The computer program/program product is stored on a storage medium. The computer program/program product, when executed by at least one processor, implements the various processes of the method embodiment in FIG. 6 or FIG. 7, and can achieve the same technical effect, which will not be repeated here in order to avoid repetition.

An embodiment of this application further provides a communication system. The communication system includes a terminal and a network-side device. The terminal is configured to perform the various processes in FIG. 6 and the above method embodiments. The network-side device is configured to perform the various processes in FIG. 7 and the above method embodiments, and can achieve the same technical effect, which will not be repeated here in order to avoid repetition.

It should be noted that the terms "include", "comprise", or any other variation thereof herein are intended to cover a non-exclusive inclusion, so that a process, method, object or device that includes a series of elements not only includes these elements, but also includes other elements that are not explicitly listed or are inherent to such a process, method, object or device. Without further limitations, the element limited by the statement 'including a...' does not preclude the presence of another identical element in a process, method, object or apparatus that includes that element. In addition, the scope of the methods and apparatuses in the embodiments of this application is not limited to performing functions in the order shown or discussed, but may also include performing functions in a substantially simultaneous manner or in the opposite order according to the involved functions. For example, the described methods may be executed in a different order from the described ones, and various steps may also be added, omitted or combined. In addition, features described with reference to certain examples may be combined in other examples.

According to the descriptions of the foregoing implementations, a person skilled in the art may clearly understand that the methods in the foregoing embodiments may be implemented by using a computer software product and a necessary universal hardware platform, or may certainly be implemented by using hardware. The computer software product is stored in a storage medium (e.g., an ROM, an RAM, a magnetic disk, or an optical disc), and includes several instructions, to enable a terminal or a network-side device to perform the methods described in the embodiments of this application.

The embodiments of this application have been described above with reference to the drawings. However, this application is not limited to the specific implementations above. The specific implementations above are only exemplary rather than restrictive. Under the inspiration of this application, those skilled in the art may make many implementations without departing from the essence and the scope of protection of this application, which, however, still fall within the scope of protection of this application.

## Claims

1. A sensing processing method, comprising:
- measuring, by a terminal, one or more first signals to obtain measurements of a target indicator of the one or more first signals, wherein
the target indicator comprises at least one of the following: a first indicator, a second indicator, and a third indicator;
the first indicator is a linear average of received power of a sensing target-associated path in a channel response obtained by measuring a target signal on a resource unit carrying the target signal;
the second indicator comprises at least one of the following: a fourth indicator, a fifth indicator, and a sixth indicator, wherein the fourth indicator is a sum of a linear average of power of paths other than the sensing target-associated path in the channel response of the target signal on a target resource and a linear average of power of interference and noise from signals other than the target signal on a first resource, wherein the first resource is the target resource or a resource other than the target resource; the fifth indicator is a linear average of power of interference and noise from the signals other than the target signal on a second resource, and the second resource is the target resource or a resource other than the target resource; the sixth indicator is a linear average of power of paths other than the sensing target-associated path in the channel response of the target signal on the target resource; the target resource comprises a resource unit carrying the first signal;
the third indicator comprises at least one of the following: a seventh indicator, an eighth indicator, a ninth indicator, and a tenth indicator, wherein the seventh indicator represents the first indicator divided by the fourth indicator, the eighth indicator represents the first indicator divided by the fifth indicator, the ninth indicator represents the first indicator divided by the sixth indicator, the tenth indicator represents the first indicator divided by a first received power and then multiplied by a first coefficient, the first received power represents total received power on the target resource, or the first received power represents a product of a received signal strength indication RSSI and a second coefficient, and a measurement resource of the RSSI is the target resource or another resource.

2. The method according to claim 1, wherein a method for acquiring the sensing target-associated path comprises:
- performing, by the terminal based on a target signal and a received signal corresponding to the target signal, channel estimation to obtain a channel response;
- transforming, by the terminal, the channel response into a first dimension; and
- determining, by the terminal, a sensing target-associated path from paths corresponding to the first dimension, wherein
the first dimension comprises at least one of the following:
- a delay dimension;
- a Doppler dimension;
- an azimuth angle dimension;
- an elevation angle dimension.

3. The method according to claim 2, wherein the determining, by the terminal, a sensing target-associated path from paths corresponding to the first dimension comprises:
- selecting, by the terminal, a path satisfying a first condition as the sensing target-associated path from the paths corresponding to the first dimension, wherein
the first condition comprises at least one of the following:
- a first parameter of the path is greater than or equal to a first threshold or falls within a first interval range;
- a difference between the first parameter of the path and that of a first-arrival path or a reference path is greater than or equal to a second threshold or falls within a second interval range;
- a second parameter of the path satisfies a preset modulation rule, wherein
the first parameter comprises at least one of the following: amplitude, power, strength, energy, Doppler, delay, and angle;
the second parameter comprises at least one of the following: amplitude, power, strength, energy, and phase.

4. The method according to claim 3, wherein the selecting, by the terminal, a path satisfying a first condition as the sensing target-associated path from the paths corresponding to the first dimension comprises:
- determining, by the terminal, a first path set from the paths corresponding to the first dimension, wherein a third parameter of each path in the first path set is greater than or equal to a third threshold, and the third parameter comprises at least one of the following: amplitude, power, strength, energy; and
- determining, from the first path set, a path satisfying a first condition as the sensing target-associated path.

5. The method according to claim 1, wherein before the measuring, by a terminal, one or more first signals to obtain measurements of a target indicator of the one or more first signals, the method further comprises:
- receiving, by the terminal, first information sent by a network-side device, wherein the first information comprises a target indicator of the first signal that the terminal needs to measure.

6. The method according to claim 1, wherein measuring, by the terminal, the plurality of first signals comprises:
- measuring, by the terminal, the first signals by using different receiving beams.

7. The method according to claim 1, wherein the method further comprises:
- determining, by the terminal, whether the measurements of the target indicator of the one or more first signals satisfy a second condition; and
- reporting, by the terminal to a network-side device, an identifier of the at least part of first signals in a case that the measurements of the target indicator of at least part of the one or more first signals satisfy the second condition;
or
- skipping initiating, by the terminal, a random access procedure in a case that the measurements of the target indicator of the one or more first signals do not satisfy the second condition, or initiating, by the terminal, a random access procedure and reporting, by means of Message 1 or Message 3 or Message A, to the network-side device that the measurements of the target indicator of the first signal do not satisfy the second condition or that the terminal does not participate in a sensing service, wherein
the second condition comprises at least one of the following:
- the measurements of the target indicator are greater than or equal to a fourth threshold;
- the measurements of the target indicator are less than or equal to a fifth threshold;
- the measurements of the target indicator fall within a third interval range;
- a proportion of the measurements of the target indicator being greater than or less than a sixth threshold within a first time window is greater than or equal to a first proportion;
- a proportion of the measurements of the target indicator falling within a fourth interval range within a second time window is greater than or equal to a second proportion;
- a number of times that the measurements of the target indicator are greater than or less than a seventh threshold within a third time window is greater than or equal to a first number of times;
- a number of times that the measurements of the target indicator fall within a fifth interval range within a fourth time window is greater than or equal to a second number of times.

8. The method according to claim 7, wherein the reporting, by the terminal to a network-side device, an identifier of the at least part of first signals in a case that the measurements of the target indicator of at least part of the one or more first signals satisfy the second condition comprises:
- reporting, by the terminal to the network-side device, an identifier of the at least part of first signals in a case that the measurements of the target indicator of at least part of first signals of the one or more first signals satisfy the second condition, and communication link performance of the at least part of first signals satisfies a communication condition.

9. The method according to claim 7 or 8, wherein the reporting, by the terminal to the network-side device, an identifier of the at least part of first signals includes:
- reporting, by the terminal to the network-side device, the identifier of the at least part of first signals by means of Message 1 or Message 3 or Message A.

10. The method according to claim 9, wherein the method further comprises:
- receiving, by the terminal, second information by means of Message 2 or Message 4 or Message B, wherein the second information comprises at least one of the following: sensing-related information, configuration information of a second signal, and format information of a measurement quantity fed back by the terminal.

11. The method according to claim 1, wherein the method further comprises:
- sending, by the terminal to a network-side device, the measurements of the target indicator of the one or more first signals by means of at least one of Message 1, Message 3, Message A, or a physical uplink shared channel PUSCH resource scheduled by a configured grant.

12. The method according to claim 9 or 11, wherein a preamble in the Message 1 or the Message A is associated with the identifier of the first signal.

13. The method according to any one of claims 1 to 11, wherein the first information further comprises at least one of the following: a sensing requirement, configuration information of the first signal, time information of a sensing service, and a sensing mode.

14. The method according to any one of claims 1 to 11, wherein the first signal comprises at least one of the following: a dedicated signal for sensing, a channel state information reference signal, a tracking reference signal, a synchronization signal.

15. A sensing processing method, comprising:
- sending, by a network-side device, first information, wherein the first information comprises a target indicator of a first signal that a terminal needs to measure, wherein
the target indicator comprises at least one of the following: a first indicator, a second indicator, and a third indicator;
the first indicator is a linear average of received power of a sensing target-associated path in a channel response obtained by measuring a target signal on a resource unit carrying the target signal;
the second indicator comprises at least one of the following: a fourth indicator, a fifth indicator, and a sixth indicator, wherein the fourth indicator is a sum of a linear average of power of paths other than the sensing target-associated path in the channel response of the target signal on a target resource and a linear average of power of interference and noise from signals other than the target signal on a first resource, wherein the first resource is the target resource or a resource other than the target resource; the fifth indicator is a linear average of power of interference and noise from the signals other than the target signal on a second resource, and the second resource is the target resource or a resource other than the target resource; the sixth indicator is a linear average of power of paths other than the sensing target-associated path in the channel response of the target signal on the target resource; the target resource comprises a resource unit carrying the first signal;
the third indicator comprises at least one of the following: a seventh indicator, an eighth indicator, a ninth indicator, and a tenth indicator, wherein the seventh indicator represents the first indicator divided by the fourth indicator, the eighth indicator represents the first indicator divided by the fifth indicator, the ninth indicator represents the first indicator divided by the sixth indicator, the tenth indicator represents the first indicator divided by a first received power and then multiplied by a first coefficient, the first received power represents total received power on the target resource, or the first received power represents a product of a received signal strength indication RSSI and a second coefficient, and a measurement resource of the RSSI is the target resource or another resource.

16. The method according to claim 15, wherein after the sending, by a network-side device, first information, the method further comprises:
- receiving, by the network-side device, an identifier of a target first signal by means of Message 1 or Message 3 or Message A, wherein measurements of a target indicator of the target first signal satisfy a second condition, wherein
the second condition comprises at least one of the following:
- the measurements of the target indicator are greater than or equal to a fourth threshold;
- the measurements of the target indicator are less than or equal to a fifth threshold;
- the measurements of the target indicator fall within a third interval range;
- a proportion of the measurements of the target indicator being greater than or less than a sixth threshold within a first time window is greater than or equal to a first proportion;
- a proportion of the measurements of the target indicator falling within a fourth interval range within a second time window is greater than or equal to a second proportion;
- a number of times that the measurements of the target indicator are greater than or less than a seventh threshold within a third time window is greater than or equal to a first number of times;
- a number of times that the measurements of the target indicator fall within a fifth interval range within a fourth time window is greater than or equal to a second number of times.

17. The method according to claim 16, wherein the method further comprises:
- sending, by the network-side device, second information by means of Message 2 or Message 4 or Message B, wherein the second information comprises at least one of the following: sensing-related information, configuration information of a second signal, and format information of a measurement quantity fed back by the terminal.

18. The method according to claim 15, wherein after the sending, by a network-side device, first information, the method further comprises:
- receiving, by the network-side device, measurements of a target indicator of one or more first signals sent by the terminal.

19. The method according to claim 18, wherein after the receiving, by the network-side device, measurements of a target indicator of one or more first signals sent by the terminal, the method further comprises:
- determining, by the network-side device, whether the measurements of the target indicator of the one or more first signals satisfy a third condition; and
- sending, to the terminal, third information in a case that the measurements of the target indicator of at least part of the one or more first signals satisfy the third condition, wherein the third information is used to instruct the terminal to participate in a sensing service;
the third condition comprises at least one of the following:
- the measurements of the target indicator are greater than or equal to an eighth threshold;
- the measurements of the target indicator are less than or equal to a ninth threshold;
- the measurements of the target indicator fall within a sixth interval range;
- a proportion of the measurements of the target indicator being greater than or less than a tenth threshold within a fifth time window is greater than or equal to a third proportion;
- a proportion of the measurements of the target indicator falling within a seventh interval range within a sixth time window is greater than or equal to a fourth proportion;
- a number of times that the measurements of the target indicator are greater than or less than an eleventh threshold within a seventh time window is greater than or equal to a third number of times;
- a number of times that the measurements of the target indicator fall within an eighth interval range within an eighth time window is greater than or equal to a fourth number of times.

20. The method according to claim 18, wherein the receiving, by the network-side device, measurements of a target indicator of one or more first signals sent by the terminal comprises:
receiving, by the network-side device, the measurements of the target indicator of the one or more first signals sent by the terminal by means of at least one of Message 1, Message 3, Message A, or a PUSCH resource scheduled by a configured grant.

21. The method according to claim 19, wherein the sending, to the terminal, third information comprises:
- sending, by the network-side device, the third information to the terminal by means of at least one of Message 2, Message 4, or Message B.

22. The method according to any one of claims 12 to 21, wherein the first information further comprises at least one of the following: a sensing requirement, configuration information of the first signal, time information of a sensing service, and a sensing mode.

23. The method according to any one of claims 12 to 21, wherein the first signal comprises at least one of the following: a dedicated signal for sensing, a channel state information reference signal, a tracking reference signal, a synchronization signal.

24. A sensing processing apparatus, comprising:
- a first measurement module, configured to measure one or more first signals to obtain measurements of a target indicator of the one or more first signals, wherein
the target indicator comprises at least one of the following: a first indicator, a second indicator, and a third indicator;
the first indicator is a linear average of received power of a sensing target-associated path in a channel response obtained by measuring a target signal on a resource unit carrying the target signal;
the second indicator comprises at least one of the following: a fourth indicator, a fifth indicator, and a sixth indicator, wherein the fourth indicator is a sum of a linear average of power of paths other than the sensing target-associated path in the channel response of the target signal on a target resource and a linear average of power of interference and noise from signals other than the target signal on a first resource, wherein the first resource is the target resource or a resource other than the target resource; the fifth indicator is a linear average of power of interference and noise from the signals other than the target signal on a second resource, and the second resource is the target resource or a resource other than the target resource; the sixth indicator is a linear average of power of paths other than the sensing target-associated path in the channel response of the target signal on the target resource; the target resource comprises a resource unit carrying the first signal;
the third indicator comprises at least one of the following: a seventh indicator, an eighth indicator, a ninth indicator, and a tenth indicator, wherein the seventh indicator represents the first indicator divided by the fourth indicator, the eighth indicator represents the first indicator divided by the fifth indicator, the ninth indicator represents the first indicator divided by the sixth indicator, the tenth indicator represents the first indicator divided by a first received power and then multiplied by a first coefficient, the first received power represents total received power on the target resource, or the first received power represents a product of a received signal strength indication RSSI and a second coefficient, and a measurement resource of the RSSI is the target resource or another resource.

25. The apparatus according to claim 24, wherein the apparatus further comprises:
- a first determination module, configured to determine whether the measurements of the target indicator of the one or more first signals satisfy a second condition; and
- a first processing module, configured to report, to a network-side device, an identifier of the at least part of first signals in a case that the measurements of the target indicator of at least part of the one or more first signals satisfy the second condition;
or
- a second processing module, configured to skip initiating a random access procedure in a case that the measurements of the target indicator of the one or more first signals do not satisfy the second condition, or initiate a random access procedure and reporting, by means of Message 1 or Message 3 or Message A, to the network-side device that the measurements of the target indicator of the first signal do not satisfy the second condition or that the terminal does not participate in a sensing service, wherein
the second condition comprises at least one of the following:
- the measurements of the target indicator are greater than or equal to a fourth threshold;
- the measurements of the target indicator are less than or equal to a fifth threshold;
- the measurements of the target indicator fall within a third interval range;
- a proportion of the measurements of the target indicator being greater than or less than a sixth threshold within a first time window is greater than or equal to a first proportion;
- a proportion of the measurements of the target indicator falling within a fourth interval range within a second time window is greater than or equal to a second proportion;
- a number of times that the measurements of the target indicator are greater than or less than a seventh threshold within a third time window is greater than or equal to a first number of times;
- a number of times that the measurements of the target indicator fall within a fifth interval range within a fourth time window is greater than or equal to a second number of times.

26. A sensing processing apparatus, applied to a network-side device, comprising:
- a second sending module, configured to send first information, wherein the first information comprises a target indicator of a first signal that a terminal needs to measure, wherein
the target indicator comprises at least one of the following: a first indicator, a second indicator, and a third indicator;
the first indicator is a linear average of received power of a sensing target-associated path in a channel response obtained by measuring a target signal on a resource unit carrying the target signal;
the second indicator comprises at least one of the following: a fourth indicator, a fifth indicator, and a sixth indicator, wherein the fourth indicator is a sum of a linear average of power of paths other than the sensing target-associated path in the channel response of the target signal on a target resource and a linear average of power of interference and noise from signals other than the target signal on a first resource, wherein the first resource is the target resource or a resource other than the target resource; the fifth indicator is a linear average of power of interference and noise from the signals other than the target signal on a second resource, and the second resource is the target resource or a resource other than the target resource; the sixth indicator is a linear average of power of paths other than the sensing target-associated path in the channel response of the target signal on the target resource; the target resource comprises a resource unit carrying the first signal;
the third indicator comprises at least one of the following: a seventh indicator, an eighth indicator, a ninth indicator, and a tenth indicator, wherein the seventh indicator represents the first indicator divided by the fourth indicator, the eighth indicator represents the first indicator divided by the fifth indicator, the ninth indicator represents the first indicator divided by the sixth indicator, the tenth indicator represents the first indicator divided by a first received power and then multiplied by a first coefficient, the first received power represents total received power on the target resource, or the first received power represents a product of a received signal strength indication RSSI and a second coefficient, and a measurement resource of the RSSI is the target resource or another resource.

27. The apparatus according to claim 26, wherein the apparatus further comprises:
- a third receiving module, configured to receive an identifier of a target first signal by means of Message 1 or Message 3 or Message A, wherein measurements of a target indicator of the target first signal satisfy a second condition, wherein
the second condition comprises at least one of the following:
- the measurements of the target indicator are greater than or equal to a fourth threshold;
- the measurements of the target indicator are less than or equal to a fifth threshold;
- the measurements of the target indicator fall within a third interval range;
- a proportion of the measurements of the target indicator being greater than or less than a sixth threshold within a first time window is greater than or equal to a first proportion;
- a proportion of the measurements of the target indicator falling within a fourth interval range within a second time window is greater than or equal to a second proportion;
- a number of times that the measurements of the target indicator are greater than or less than a seventh threshold within a third time window is greater than or equal to a first number of times;
- a number of times that the measurements of the target indicator fall within a fifth interval range within a fourth time window is greater than or equal to a second number of times.

28. The apparatus according to claim 26, wherein the apparatus further comprises:
- a second determination module, configured to determine whether the measurements of the target indicator of the one or more first signals satisfy a third condition; and
- a fourth sending module, configured to send, to the terminal, third information in a case that the measurements of the target indicator of at least part of the one or more first signals satisfy the third condition, wherein the third information is used to instruct the terminal to participate in a sensing service;
the third condition comprises at least one of the following:
- the measurements of the target indicator are greater than or equal to an eighth threshold;
- the measurements of the target indicator are less than or equal to a ninth threshold;
- the measurements of the target indicator fall within a sixth interval range;
- a proportion of the measurements of the target indicator being greater than or less than a tenth threshold within a fifth time window is greater than or equal to a third proportion;
- a proportion of the measurements of the target indicator falling within a seventh interval range within a sixth time window is greater than or equal to a fourth proportion;
- a number of times that the measurements of the target indicator are greater than or less than an eleventh threshold within a seventh time window is greater than or equal to a third number of times;
- a number of times that the measurements of the target indicator fall within an eighth interval range within an eighth time window is greater than or equal to a fourth number of times.

29. A terminal, comprising a processor, a memory, and a program or an instruction stored in the memory and runnable on the processor, wherein the program or the instruction, when executed by the processor, implements the steps of the method according to any one of claims 1 to 14.

30. A network-side device, comprising a processor, a memory, and a program or an instruction stored in the memory and runnable on the processor, wherein the program or the instruction, when executed by the processor, implements the steps of the method according to any one of claims 15 to 23.

31. A readable storage medium, having a program or an instruction stored therein, wherein the program or the instruction, when executed by a processor of a terminal, implements the steps of the method according to any one of claims 1 to 23.
